# EUROPEAN PATENT APPLICATION

(11) **EP 4 837 486 A1**
(43) Date of publication of application: **11.11.2026**
(21) Application number: 25878445.3
(22) Date of filing: 17.12.2025
(51) Int. Cl.: A47L 11/24

(54) **CONTROL METHOD AND APPARATUS FOR CLEANING ROBOT, AND CLEANING SYSTEM**

(30) Priority: 21.03.2025 CN 202510344738
(71) Applicant: Dreame Innovation Technology (Suzhou) Co., Ltd., Suzhou, Jiangsu 215000 (CN)
(72) Inventor: LUO, Shaohan, Suzhou, Jiangsu 215000 (CN)
(74) Representative: Gill Jennings & Every LLP
(86) International application number: PCT/CN2025/143311
(87) International publication number: WO 2026/194358

(57) **Abstract**

The present application provides a control method and apparatus for a cleaning robot and a cleaning system, relating to the field of intelligent robots. applied to the cleaning system including a cleaning robot and a cleaning base station including a receiving unit, a transport mechanism, a first cleaning component, and a second cleaning component, and includes: after the robot completes cleaning all sub-areas in a first area based on the first cleaning component, controlling the robot to return to the base station to perform a replacement with the second cleaning component required for cleaning a second area; after the robot returns to the base station and completes detaching the first cleaning component, controlling the robot to drive out of the base station; after the robot is located outside the base station, if it is determined that the second cleaning component is present in the receiving unit, controlling the robot to drive into the base station to install the second cleaning component. By optimizing the cleaning sequence of the robot, the robot can complete cleaning tasks more efficiently, reducing unnecessary frequency and time wasted on cleaning component replacements, thereby improving cleaning efficiency.

## Description

This application claims priority to Chinese Patent Application No. 202510344738.8, filed with the China National Intellectual Property Administration on March 21, 2025, and entitled "CONTROL METHOD AND APPARATUS FOR CLEANING ROBOT AND CLEANING SYSTEM", the entire content of which is hereby incorporated by reference.

### TECHNICAL FIELD

The present application relates to the field of intelligent robots, and in particular, to a control method and apparatus for a cleaning robot and a cleaning system.

### BACKGROUND

With the fast pace of life and increasing demands for cleaning efficiency, automated cleaning robots have emerged. Effectively scheduling the sequence and timing of cleaning robots performing cleaning tasks in specific environments is an effective measure to ensure maximum cleaning efficiency and effects.

In related art, the cleaning robots use the same cleaning component in different areas of a cleaning room and randomly generate a cleaning sequence based on the cleaning areas. However, due to the complexity of indoor environments and the varying cleaning requirements of different areas, how to flexibly configure cleaning manners and sequence according to the specific cleaning requirements of the areas to match the refined cleaning requirements of the user is a problem that urgently needs to be solved.

### SUMMARY

The present application provides a control method and apparatus for a cleaning robot and a cleaning system. By planning a cleaning sequence in which all sub-areas to be cleaned using a first cleaning component are cleaned first, and then controlling the cleaning robot to return to a cleaning base station to perform a replacement with a second cleaning component for cleaning a next cleaning area, the cleaning robot can complete cleaning tasks more efficiently, reducing time waste caused by frequent component replacements, thereby improving cleaning efficiency.

In a first aspect, the present application provides a control method for a cleaning robot, applied to a cleaning system. The cleaning system includes a cleaning robot and a cleaning base station, the cleaning base station includes a receiving unit, a transport mechanism, a first cleaning component, and a second cleaning component; and the first cleaning component and the second cleaning component correspond to different cleaning areas; the receiving unit is configured to receive a cleaning component detached from the cleaning robot, and to receive a cleaning component to be installed on the cleaning robot; and the method includes:
after completing, by the cleaning robot, cleaning of all sub-areas in a first area based on the first cleaning component currently installed, controlling the cleaning robot to return to the cleaning base station to perform a replacement with the second cleaning component required for cleaning a second area; where the first area includes at least one sub-area to be cleaned using the first cleaning component;
after the cleaning robot returns to the cleaning base station and completes detachment of the first cleaning component, controlling the cleaning robot to drive out of the cleaning base station; and
after the cleaning robot is located outside the cleaning base station, if it is determined that a cleaning component present in the receiving unit is the second cleaning component, controlling the cleaning robot to drive into the cleaning base station to install the second cleaning component in the receiving unit.

Since the cleaning requirements of each cleaning area are different, using appropriate cleaning components to clean each sub-area can ensure ideal cleaning results. Moreover, in the present application, the cleaning robot is controlled to return to the cleaning base station to perform the replacement with the second cleaning component for the next cleaning area only after all the sub-areas to be cleaned using the first cleaning component have been cleaned, which optimizes the cleaning sequence of the cleaning robot, so that the cleaning robot can complete the cleaning tasks more efficiently, reducing unnecessary frequency and time wasted on cleaning component replacements. Furthermore, the present application also requires checking and confirming the second cleaning component outside the cleaning base station to ensure returning to the cleaning base station for installation only when the cleaning component present in the receiving unit is the second cleaning component, which avoids unnecessary entry and exit operations to the cleaning base station, reduces energy consumption and time waste, optimizes the replacement process of the cleaning components, and thus improves overall operational efficiency and cleaning efficiency.

Furthermore, through intelligent cleaning component confirmation and replacement processes, the cleaning system not only demonstrates a high level of autonomy and intelligence, reducing reliance on manual intervention, but also can ensure that the cleaning task for each cleaning area is performed using the correct cleaning component, improving cleaning effects and meeting the cleaning requirements of different areas.

Optionally, the cleaning areas corresponding to the first cleaning component and the second cleaning component are determined by at least one of the following manners:
determining based on position information of the cleaning areas corresponding to the first cleaning component and the second cleaning component;
determining based on material information of surfaces to be cleaned in the cleaning areas corresponding to the first cleaning component and the second cleaning component;
determining based on a degree of dirtiness of the surfaces to be cleaned in the cleaning areas corresponding to the first cleaning component and the second cleaning component; and
determining based on functional information of the cleaning areas corresponding to the first cleaning component and the second cleaning component.

Therefore, by determining the cleaning areas in multiple manners, it can flexibly adapt to the requirements of different application scenarios, so that the cleaning robot can adapt to a variety of different environments and cleaning requirements. Whether in homes, commercial or industrial settings, efficient cleaning services can be provided. Moreover, by accurately matching the cleaning components with area characteristics, the cleaning robot can complete cleaning tasks more efficiently, reducing unnecessary repetition and resource waste, and ensuring ideal cleaning effects, avoiding problems such as damage to the material of the surface to be cleaned or incomplete cleaning.

Optionally, after the completing, by the cleaning robot, the cleaning of all the sub-areas in the first area based on the first cleaning component currently installed, the controlling the cleaning robot to return to the cleaning base station to perform the replacement with the second cleaning component required for cleaning the second area includes:
determining the first area to be cleaned by the cleaning robot based on the first cleaning component currently installed based on a preset cleaning sequence;
controlling the cleaning robot to clean all the sub-areas in the first area based on the first cleaning component, and after cleaning is completed, determining the second area to be cleaned by the cleaning robot based on the preset cleaning sequence; and
controlling the cleaning robot to return to the cleaning base station to perform the replacement with the second cleaning component required for cleaning the second area.

In this way, by presetting the cleaning sequence, the cleaning robot can perform the cleaning tasks in an orderly manner, reducing unnecessary repetition and time waste, and improving overall cleaning efficiency. The preset cleaning sequence and cleaning component replacement process can ensure that resources are used rationally, reducing energy consumption and the time spent on frequent cleaning component replacement. In addition, the automated cleaning sequence and cleaning component replacement process reduce reliance on manual operation, lower labor costs and operational complexity. The orderly and efficient cleaning process can also improve user satisfaction, thereby providing a better user experience.

Optionally, the preset cleaning sequence is determined by any one of the following manners:
after the cleaning robot completes mapping, generating the preset cleaning sequence for recognized cleaning areas based on cleaning components required for the cleaning areas;
in response to a voice control command from a user, generating the preset cleaning sequence for the cleaning areas, where the voice control command is used to adjust a cleaning component required for at least one cleaning area and a cleaning sequence of the at least one cleaning area;
in response to a configuration operation from the user on a terminal device, generating the preset cleaning sequence for the cleaning areas, where the configuration operation is used to configure the cleaning component required for at least one cleaning area and the cleaning sequence of the at least one cleaning area; and the terminal device establishes a communication connection with the cleaning robot; and
generating the preset cleaning sequence for the cleaning areas based on historical information of a cleaning component used after the last cleaning task is completed; and
where in each cleaning area, all sub-areas are grouped into one group and cleaned in a specific sequence, and a next group is cleaned after one group is completed.

Therefore, multiple manners for generating the cleaning sequence provide high flexibility, so that the cleaning system can adapt to different user requirements and environmental changes. For example, through voice control and the configuration of the terminal device, the user may easily adjust the cleaning sequence, improving user experience and satisfaction; and the cleaning sequence generation method based on mapping recognition and historical information can ensure the efficient execution of cleaning tasks, reducing unnecessary repetition and resource waste. In this way, the cleaning system can intelligently generate the cleaning sequence according to the multiple methods, demonstrating a high level of intelligence and reducing reliance on manual intervention. In addition, the grouping cleaning method of the sub-areas corresponding to each cleaning area ensures the systematic and orderly nature of cleaning tasks, thereby improving cleaning efficiency.

Optionally, the cleaning base station further includes a third cleaning component, the third cleaning component and the second cleaning component correspond to different cleaning areas, and the third cleaning component corresponds to a third area; and the method further includes:
after determining the second area to be cleaned by the cleaning robot based on the preset cleaning sequence, determining a first duration for the cleaning robot to return to the cleaning base station to perform the replacement with the second cleaning component and return to the second area, and determining a second duration for the cleaning robot to return to the cleaning base station to perform a replacement with the third cleaning component and return to the third area; where the third area is a cleaning area closest to the first area and/or the cleaning base station; and
determining a target cleaning component to be replaced by the cleaning robot based on the first duration and the second duration, to clean a target area based on the target cleaning component.

In this way, by comparing the duration of different paths, the cleaning system can select the path with the shortest duration, thereby improving cleaning efficiency and reducing unnecessary time waste. Moreover, the cleaning system may dynamically adjust the cleaning path and the cleaning component selection according to real-time situations, demonstrating a high degree of flexibility and adaptability. Therefore, through intelligent duration evaluation and cleaning component selection, the cleaning system can better utilize resources, reducing energy consumption and overall cleaning time, improving the completion speed of cleaning tasks, and further improving user satisfaction and providing a better user experience.

Optionally, the determining the target cleaning component to be replaced by the cleaning robot based on the first duration and the second duration includes:
in a case where the first duration is less than or equal to the second duration, controlling the cleaning robot to return to the cleaning base station to perform the replacement with the second cleaning component, to clean the second area based on the second cleaning component; and
in a case where the first duration is greater than the second duration, controlling the cleaning robot to return to the cleaning base station to perform the replacement with the third cleaning component to clean the third area based on the third cleaning component, and to return to the cleaning base station to perform the replacement with the second cleaning component after cleaning of the third area is completed.

In this way, by selecting the path with the shortest duration, the cleaning system can improve cleaning efficiency and reduce unnecessary time waste, and further by combining with replacing the appropriate cleaning components to clean the corresponding cleaning areas, the overall cleaning time can be reduced and the completion speed of cleaning tasks is improved. Therefore, this method reflects the intelligence level of the cleaning system, enabling it to make complex decisions autonomously and reducing the reliance on human intervention.

Optionally, the determining the first duration for the cleaning robot to return to the cleaning base station to perform the replacement with the second cleaning component and return to the second area includes:
determining a first path for the cleaning robot to return from a current position thereof to the cleaning base station, a second path for the cleaning robot to travel from the cleaning base station to the second area, and a driving speed of the cleaning robot;
determining a third duration to return to the cleaning base station based on a length of the first path and the driving speed and determining a fourth duration to travel to the second area based on a length of the second path and the driving speed;
estimating a fifth duration required for the cleaning robot to perform the replacement according to a previous replacement duration of the second cleaning component; and
determining the first duration based on the third duration, the fourth duration, the fifth duration, and a sixth duration; where the sixth duration is an average duration required for the cleaning robot to avoid living obstacles within a historical time period.

In this way, by comprehensively considering various factors such as the lengths of the paths, the driving speed, the replacement duration, and obstacle avoidance duration, the cleaning system can more accurately estimate the time required to perform the replacement with different cleaning components and return to the corresponding cleaning areas. This time estimation helps to select appropriate cleaning component replacement strategies, reduce unnecessary waiting and delays, improve the cleaning efficiency and the completion speed of the tasks, and thus manage its operation process more efficiently, ensuring the efficient and smooth completion of cleaning tasks.

Optionally, the completing, by the cleaning robot, the cleaning of all the sub-areas in the first area based on the first cleaning component currently installed includes:
when performing traversal cleaning of all the sub-areas in the first area based on the first cleaning component, in a case where a first obstacle area is detected during a process of travelling from a current position to a target sub-area, cleaning the target sub-area by the cleaning robot based on the first cleaning component after passing the first obstacle area to complete the cleaning of all the sub-areas in the first area; where the first obstacle area is an obstacle area that the cleaning robot is capable of crossing.

In this way, through intelligent obstacle detection and handling, the cleaning robot can ensure comprehensive cleaning of reachable areas, minimize omissions, and ensure the completion rate of cleaning tasks. Furthermore, by effectively handling obstacle areas, it reduces stagnation and detours caused by the obstacles, thereby improving overall cleaning efficiency. Therefore, by autonomously detecting and handling obstacle areas, the cleaning system demonstrates a high level of intelligence, enabling it to autonomously adapt to complex environments and perform tasks.

Optionally, the completing, by the cleaning robot, the cleaning of all the sub-areas in the first area based on the first cleaning component currently installed includes:
when performing traversal cleaning of all the sub-areas in the first area based on the first cleaning component, in a case where a second obstacle area is detected during a process of travelling from a current position to a target sub-area, determining whether there are other sub-areas to be cleaned using the first cleaning component; where the second obstacle area includes an area where an uncrossable obstacle is located and/or a restricted area formed based on the obstacle; and
in a case where it is determined that there are other sub-areas to be cleaned, cleaning the other sub-areas to be cleaned based on the first cleaning component.

It can be understood that not all the sub-areas in the first area are reachable for cleaning. The present application prioritizes cleaning of reachable sub-areas in the first area, which can more effectively utilize the power of the cleaning robot and the cleaning components, reduce frequent returns to the cleaning base station for replacement of cleaning components, and avoid unnecessary waste of resources.

In this way, through intelligent obstacle detection and area adjustment, the cleaning robot can continue to perform the cleaning task. Even when encountering uncrossable obstacles, it can ensure that the task continues, demonstrating a high level of intelligence, and enabling it to autonomously adapt to complex environments and perform tasks. Moreover, by effectively handling obstacles and replanning the cleaning path, stagnation and detours caused by obstacles can be reduced, overall cleaning efficiency can be improved, and the cleaning robot can adapt to various environments and obstacle types, demonstrating a high degree of flexibility and adaptability.

Optionally, the method further includes:
in a case where it is determined that there are no other sub-areas to be cleaned, controlling the cleaning robot to return to the cleaning base station to perform the replacement with the second cleaning component required to perform cleaning of a next area.

In this way, the cleaning robot can avoid wasting time and resources in unnecessary areas. This strategy ensures that the cleaning robot only cleans the areas that need it, thereby improving the overall cleaning efficiency. Furthermore, by performing the replacement with the second cleaning component suitable for the next cleaning area, the cleaning robot can handle different types of cleaning tasks more effectively. This flexibility ensures that each area can be appropriately cleaned, improving the cleaning effect. In addition, after determining that there are no other sub-areas to be cleaned, the cleaning robot directly returns to the cleaning base station to perform the replacement with the second cleaning component, which can reduce unnecessary movement and operation, thereby saving battery energy and extending the working time of the cleaning robot.

Optionally, the cleaning robot includes a body and a recognition sensor that is configured to recognize a presence of the second cleaning component in the receiving unit; the determining that the cleaning component present in the receiving unit is the second cleaning component includes:
determining that the second cleaning component is present in the receiving unit based on a recognition result of the recognition sensor; where a recognition range of the recognition sensor covers the second cleaning component in the receiving unit.

In this way, the recognition sensor obtains the appropriate viewing angle and distance to recognize the cleaning component, which can improve the accuracy of recognition. Accurate recognition helps to avoid misoperation caused by recognition errors, such as installing an unsuitable cleaning component, thereby reducing the possibility of cleaning task interruption and rework. In addition, the recognition sensor is integrated on the cleaning robot, rather than on the cleaning base station, which reduces the hardware complexity and cost of the cleaning base station, while improving the flexibility of the cleaning system.

Optionally, the method further includes:
when it is determined that a posture of the cleaning robot is not capable of recognizing the second cleaning component in the cleaning base station, controlling the cleaning robot to adjust the posture thereof so that the recognition sensor faces a direction in which it is capable of detecting the second cleaning component in the cleaning base station.

In this way, by adjusting the posture to optimize the perspective of the recognition sensor, the accuracy of recognition can be improved, and the possibility of misrecognition and missed recognition can be reduced. Accurate recognition of the cleaning component can also reduce task interruption or delay caused by recognition errors, thereby improving the overall cleaning efficiency. Moreover, posture adjustment enables the cleaning robot to adapt to different environments and cleaning station layouts, demonstrating a high degree of flexibility and adaptability.

Optionally, the controlling the cleaning robot to drive into the cleaning base station includes:
in a case where it is determined that the second cleaning component is present in the receiving unit, controlling the cleaning robot to adjust the posture thereof again so that the cleaning robot faces a direction in which the cleaning robot is dockable with the cleaning base station, and controlling the cleaning robot to drive into the cleaning base station.

In this way, by adjusting the posture again, it can be ensured that the cleaning robot successfully docks with the cleaning base station, reducing errors and failure risks during docking. This posture adjustment and automatic docking process reduces the installation time of the cleaning component and improves the efficiency of replacing and installing the cleaning component. Therefore, by autonomously adjusting the posture and returning to the cleaning base station for docking, the present application may demonstrate a high level of intelligence. It may autonomously adapt to complex environments and perform tasks, thereby improving the user experience. In addition, accurate docking can also reduce task interruption or delay caused by docking failure, improving overall operational efficiency.

Optionally, the cleaning base station further includes a storage unit and a drying apparatus, the storage unit is configured to store the first cleaning component and the second cleaning component, and the drying apparatus includes an air outlet facing the storage unit for providing hot air to the storage unit; and the method further includes:
after the cleaning robot drives out of the cleaning base station, controlling the transport mechanism to pick up the first cleaning component from the receiving unit and control the transport mechanism to transport the picked-up first cleaning component to the storage unit; and controlling the transport mechanism to retrieve the second cleaning component from the storage unit and transport the second cleaning component to the receiving unit for installing by the cleaning robot; and
after the first cleaning component is transported to the storage unit, controlling the air outlet of the drying apparatus to open to dry the first cleaning component.

Therefore, the present application can dry the detached first cleaning component during the replacement of the second cleaning component, which can effectively utilize time, reduce the downtime of the cleaning robot, improve the overall operating efficiency, and simultaneously replace and dry the component to better utilize the resources and functions of the cleaning base station, avoid resource idleness, and improve the utilization efficiency of the cleaning robot.

In addition, by replacing and drying the cleaning components midway through the process, it can be ensured that the first cleaning component is ready for reuse in the shortest possible time, thereby improving the task turnaround speed of the cleaning robot.

Optionally, the method further includes:
after completing the detachment of the first cleaning component, if it is determined that the cleaning robot is still connected to the first cleaning component, and/or if it is determined that the first cleaning component is not present in the receiving unit, generating first abnormality information and/or repeating the detachment of the first cleaning component.

Therefore, by automatically detecting and handling abnormal situations, the cleaning system may promptly recognize and correct problems during detaching, which improves the operational reliability of the cleaning robot, and reduces subsequent problems caused by improper detachment of the cleaning components; and the user can understand the status of the cleaning system in a timely manner through the first abnormality information and take necessary measures to intervene, providing a more efficient and transparent operating experience and improving user satisfaction.

In addition, the cleaning system can automatically recognize and handle abnormal situations during the detachment process, improving the reliability and availability of the cleaning system and demonstrating a high level of intelligence.

Optionally, the cleaning base station further includes a storage unit that is configured to store the first cleaning component and the second cleaning component; and the method further includes:
after the transport mechanism completes an action of transporting the second cleaning component from the storage unit to the receiving unit, if it is determined that the cleaning component present in the receiving unit is not the second cleaning component, generating second abnormality information and/or controlling the transport mechanism to perform an action of transporting the second cleaning component from the storage unit to the receiving unit again.

In this way, by detecting and handling abnormal situations during transportation, the cleaning system can recognize and correct problems in a timely manner, which improves the operational reliability of the cleaning base station, reduces subsequent problems caused by improper transportation of the cleaning component; and the user can understand the status of the cleaning system in a timely manner through the second abnormality information and take necessary measures to intervene, which provides a more efficient and transparent operating experience and improves user satisfaction.

In addition, the cleaning system can automatically recognize and handle abnormal situations during transportation, demonstrating a high level of intelligence and improving the adaptability of the cleaning base station in complex environments.

Optionally, the cleaning base station further includes a storage unit that is configured to store the first cleaning component and the second cleaning component; and the method further includes:
before determining that the second cleaning component is present in the receiving unit, controlling the transport mechanism to retrieve the second cleaning component from the storage unit, and controlling the transport mechanism to transport the retrieved second cleaning component to the receiving unit; and
after it is determined that the second cleaning component is located in the receiving unit, controlling the transport mechanism to leave a position corresponding to the receiving unit.

In this way, by automatically detecting the status of the component in the receiving unit and timely retrieving the cleaning component to be installed, the cleaning robot may be ensured to quickly return to the working state, reducing downtime. Furthermore, through the automated in-situ detection and cleaning component replacement process described above, the cleaning robot can perform the cleaning tasks more quickly, improving the utilization rate and task turnover rate of the cleaning robot.

In a second aspect, the present application provides a control apparatus for a cleaning robot, applied to a cleaning system, where the cleaning system includes a cleaning robot and a cleaning base station, the cleaning base station includes a receiving unit, a transport mechanism, a first cleaning component, and a second cleaning component, and the first cleaning component and the second cleaning component correspond to different cleaning areas; the receiving unit is configured to receive a cleaning component detached from the cleaning robot, and to receive a cleaning component to be installed on the cleaning robot; and the apparatus includes:
a first control module, configured to, after completing, by the cleaning robot, cleaning of all sub-areas in a first area based on the first cleaning component currently installed, control the cleaning robot to return to the cleaning base station to perform a replacement with the second cleaning component required for cleaning a second area; where the first area includes at least one sub-area to be cleaned using the first cleaning component;
a second control module, configured to, after the cleaning robot returns to the cleaning base station and completes detachment of the first cleaning component, control the cleaning robot to drive out of the cleaning base station; and
a third control module, configured to, after the cleaning robot is located outside the cleaning base station, if it is determined that a cleaning component present in the receiving unit is the second cleaning component, control the cleaning robot to drive into the cleaning base station to install the second cleaning component in the receiving unit.

In a third aspect, the present application provides a cleaning system, including a cleaning robot and a cleaning base station, where the cleaning base station includes a receiving unit, a transport mechanism, a first cleaning component, and a second cleaning component, and the first cleaning component and the second cleaning component correspond to different cleaning areas; and the receiving unit is configured to receive a cleaning component detached from the cleaning robot, and to receive a cleaning component to be installed on the cleaning robot; and
the cleaning system is configured to execute the method according to any one of the first aspect.

In a fourth aspect, the present application provides a computer-readable storage medium storing computer-executable instructions, which, when executed by a processor, are configured to implement the method according to any one of the first aspect.

In a fifth aspect, the present application provides a computer program product, including a computer program, which, when executed by a processor, implements the method according to any one of the first aspect.

It should be noted that the technical solutions of the second aspect to the fifth aspect of the present application correspond to those of the first aspect, and the beneficial effects achieved by their aspect and their corresponding feasible implementations are similar, which are not repeated herein.

In summary, the present application provides a control method and apparatus for a cleaning robot and a cleaning system. By dividing a cleaning area into multiple sub-areas, each sub-area may be matched with a specific cleaning component based on its material or degree of dirtiness. In this way, after the cleaning robot completes the cleaning of all the sub-areas in a first area using a first cleaning component, the cleaning robot returns to the cleaning base station to perform detachment of the first cleaning component. After the detachment of the first cleaning component is completed, the cleaning robot is controlled to drive out of the cleaning base station. When the cleaning robot is located outside the cleaning base station, the cleaning system checks whether a second cleaning component is present in the receiving unit, and the second cleaning component is a cleaning component required for cleaning a next second area. If the second cleaning component is present in the receiving unit, the cleaning robot re-enters the cleaning base station to install the second cleaning component, and after the installation is completed, the cleaning robot performs the cleaning task of the second area. Since the cleaning robot frequently returns to the cleaning base station to replace the cleaning components, a large amount of time is required, the present application controls the cleaning robot to return to the cleaning base station to perform the replacement with the second cleaning component only after all the sub-areas to be cleaned by the first cleaning component have been cleaned in advance. The second cleaning component and the first cleaning component correspond to different cleaning areas, so that the cleaning sequence can be optimized and the time waste caused by frequent component replacement can be reduced. Furthermore, in the present application, a cleaning component check is performed outside the cleaning base station, and it returns to the cleaning base station only when it is confirmed that the cleaning component present in the receiving unit is the second cleaning component, thereby reducing the unnecessary number of returns and further improving the replacement efficiency.

### BRIEF DESCRIPTION OF DRAWINGS

The drawings, which are incorporated in and form part of this specification, illustrate embodiments consistent with the present application and, together with the description, serve to explain the principles of the present application.
FIG. 1 is a partial structural schematic diagram of a cleaning system provided in an embodiment of the present application.
FIG. 2 is a partial structural schematic diagram of another cleaning system provided in an embodiment of the present application.
FIG. 3 is a partial structural schematic diagram of yet another cleaning system provided in an embodiment of the present application.
FIG. 4 is a partial structural schematic diagram of still yet another cleaning base station provided in an embodiment of the present application.
FIG. 5 is a partial structural schematic diagram of a cleaning base station provided in an embodiment of the present application.
FIG. 6 is a schematic diagram of an application scenario provided in an embodiment of the present application.
FIG. 7 is a flowchart illustrating a control method for a cleaning robot provided in an embodiment of the present application.
FIG. 8 is a structural schematic diagram of a control apparatus for a cleaning robot provided in an embodiment of the present application.
FIG. 9 is a structural schematic diagram of a controller provided in an embodiment of the present application.

Specific embodiments of the present application have been illustrated by the above drawings, which will be described in more detail below. These drawings and descriptions are not intended to limit the scope of the concept of the present application in any way, but rather to illustrate the concept of the present application to those skilled in the art through reference to particular embodiments.

### DESCRIPTION OF EMBODIMENTS

To facilitate a clear description of technical solutions of the embodiments of the present application, the terms "first" and "second" are used in the embodiments of the present application to distinguish identical or similar items with essentially the same function and purpose. For example, a first apparatus and a second apparatus are merely used to distinguish different apparatus and do not limit their sequence of execution. Those skilled in the art may understand that the terms "first" and "second" do not limit the quantity or execution order, and that "first" and "second" do not necessarily imply that they are different.

It should be noted that, in the present application, the terms "exemplary" or "for example" are used to indicate examples, illustrations, or explanations. Any embodiment or design solution described as "exemplary" or "for example" in the present application should not be construed as being more preferred or advantageous than other embodiments or design solutions. Specifically, the use of terms such as "exemplary" or "for example" is intended to present the relevant concepts in a specific manner.

In the present application, "at least one" means one or more, and "a plurality of" means two or more. "And/or" describes the relationship between related objects, indicating that three relationships can exist. For example, A and/or B can mean: A alone, A and B simultaneously, or B alone, where A and B can be singular or plural. The character "/" generally indicates that the preceding and following related objects are in an "or" relationship. "At least one of the following" or similar expressions refer to any combination of these items, including any combination of single or plural items. For example, at least one of a, b, or c may indicate: a, b, c, a-b, a-c, b-c, or a-b-c, where a, b, and c may be single or multiple.

In related art, the cleaning robots use the same cleaning component in different areas of a cleaning room and randomly generate a cleaning sequence based on the cleaning areas. However, due to the complexity of indoor environments and the varying cleaning requirements of different areas, how to flexibly configure cleaning manners and sequence according to the specific cleaning requirements of the areas to match the refined cleaning requirements of the user is a problem that urgently needs to be solved.

Exemplarily, the cleaning robots can determine the cleaning sequence of areas with different materials of surfaces to be cleaned based on the material properties of the surfaces to be cleaned, and then clean multiple areas with different material properties of surfaces to be cleaned according to the cleaning sequence, or determine the cleaning sequence of areas with different degrees of dirtiness based on the degree of dirtiness, and then clean the multiple areas with different degrees of dirtiness according to the cleaning sequence.

However, since different materials or levels of dirt require different cleaning components, the cleaning sequence planned in the above manner may require frequent returns to the cleaning base station to replace the cleaning components, resulting in low cleaning efficiency.

For the problems described above, the present application provides a control method for a cleaning robot. By dividing a cleaning area into multiple sub-areas, each sub-area may be matched with a specific cleaning component based on its material or degree of dirtiness. In this way, after the cleaning robot completes the cleaning of all the sub-areas in a first area using a first cleaning component, the cleaning robot returns to the cleaning base station to perform detachment of the first cleaning component. After the detachment of the first cleaning component is completed, the cleaning robot is controlled to drive out of the cleaning base station. When the cleaning robot is located outside the cleaning base station, the cleaning system checks whether a second cleaning component is present in the receiving unit, and the second cleaning component is a cleaning component required for cleaning a next second area. If the second cleaning component is present in the receiving unit, the cleaning robot re-enters the cleaning base station to install the second cleaning component, and after the installation is completed, the cleaning robot performs the cleaning task of the second area. Since the cleaning robot frequently returns to the cleaning base station to replace the cleaning components, a large amount of time is required, the present application controls the cleaning robot to return to the cleaning base station to perform the replacement with the second cleaning component only after all the sub-areas to be cleaned by the first cleaning component have been cleaned in advance. The second cleaning component and the first cleaning component correspond to different cleaning areas, so that the cleaning sequence can be optimized and the time waste caused by frequent component replacement can be reduced. Furthermore, in the present application, a cleaning component check is performed outside the cleaning base station, and it returns to the cleaning base station only when it is confirmed that the cleaning component present in the receiving unit is the second cleaning component, thereby reducing the unnecessary number of returns and further improving the replacement efficiency. In summary, through reasonable cleaning component replacement and cleaning sequence planning, the cleaning robot can complete the cleaning task more efficiently, saving time and resources.

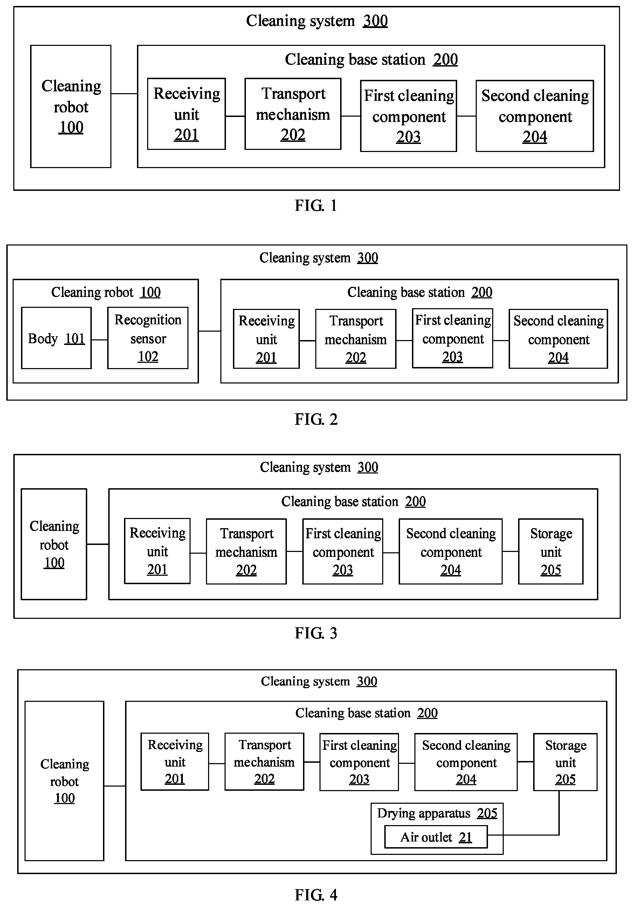

Optionally, a control method for a cleaning robot provided in the present application is applied to a cleaning system. Exemplarily, FIG. 1 is a partial structural schematic diagram of a cleaning system provided in an embodiment of the present application. As shown in FIG. 1, the cleaning system 300 includes a cleaning robot 100 and a cleaning base station 200; the cleaning base station 200 includes a receiving unit 201, a transport mechanism 202, a first cleaning component 203, and a second cleaning component 204, and the first cleaning component 203 and the second cleaning component 204 correspond to different cleaning areas; and the receiving unit 201 is configured to receive a cleaning component detached from the cleaning robot 100 and to receive a cleaning component to be installed on the cleaning robot 100.

Optionally, the cleaning component includes at least the mop assembly of the cleaning robot 100; where the cleaning robot 100 includes any automatic cleaning device with a cleaning function, such as a sweeping robot, a mopping robot, a washing robot, or a sweeping and mopping robot, and the mop assembly may be a disc mop, a triangular mop, a flat mop, or other mop disc assembly. The specific types of the cleaning robot 100 and the mop assembly are not limited in the embodiments of the present application.

For example, the first cleaning component 203 and the second cleaning component 204 may be a mop assembly, which is configured to clean the surface to be cleaned corresponding to the area to be cleaned. Alternatively, the first cleaning component 203 and the second cleaning component 204 may also include a replacement of the mop assembly and other cleaning members, such as replacing a brush type of the mop assembly. The types of the first cleaning component 203 and the second cleaning component 204 are not specifically limited in the embodiments of the present application, and may be determined based on different cleaning requirements and the types of surfaces to be cleaned.

Optionally, the receiving unit 201 may include a detachment position and an installation position. The detachment position is used for the cleaning robot 100 to disassemble the cleaning components and to receive the detached cleaning components. The installation position is used for the cleaning robot 100 to install the cleaning components and to receive the cleaning components to be installed by the cleaning robot 100. The receiving position and the installation position may be the same position on the cleaning base station 200 or partially overlapping positions to save space on the cleaning base station 200. Alternatively, the receiving position and the installation position may be located at different positions on the cleaning base station 200, so that the position distribution is more flexible. Alternatively, the receiving unit 201 may be a cleaning tank position. After the cleaning robot 100 returns to the cleaning base station 200, the cleaning components may be cleaned at the cleaning tank position, that is, a position for disassembling and installing cleaning components is provided in the cleaning base station 200, which may be configured to receive the cleaning components detached by the cleaning robot 100 and to receive the cleaning components to be installed by the cleaning robot 100.

For example, FIG. 2 is a partial structural schematic diagram of another cleaning system provided in an embodiment of the present application. As shown in FIG. 2, in addition to the structure of the cleaning system 300 shown in FIG. 1, the cleaning robot 100 of the cleaning system 300 includes a body 101 and a recognition sensor 102. The recognition sensor 102 is configured to recognize the presence of the second cleaning component 203 in the receiving unit 201.

Optionally, the recognition sensor 102 may be installed on a front side of the body 101, or on a top or side wall of the body 101. The specific installation position of the recognition sensor 102 is not limited in the embodiments of the present application.

Optionally, FIG. 3 is a partial structural schematic diagram of yet another cleaning system provided in an embodiment of the present application. As shown in FIG. 3, in addition to the structure of the cleaning system 300 shown in FIG. 1, the cleaning base station 200 of the cleaning system 300 also includes a storage unit 205 that is configured to store the first cleaning component 203 and the second cleaning component 204.

Exemplarily, FIG. 4 is a partial structural schematic diagram of still yet another cleaning system provided in an embodiment of the present application. As shown in FIG. 4, in addition to the structure of the cleaning system shown in FIG. 3, cleaning base station 200 of the cleaning system 300 also includes a drying apparatus 206 that includes an air outlet 21 facing the storage unit 205 and configured to provide hot air to the storage unit 205.

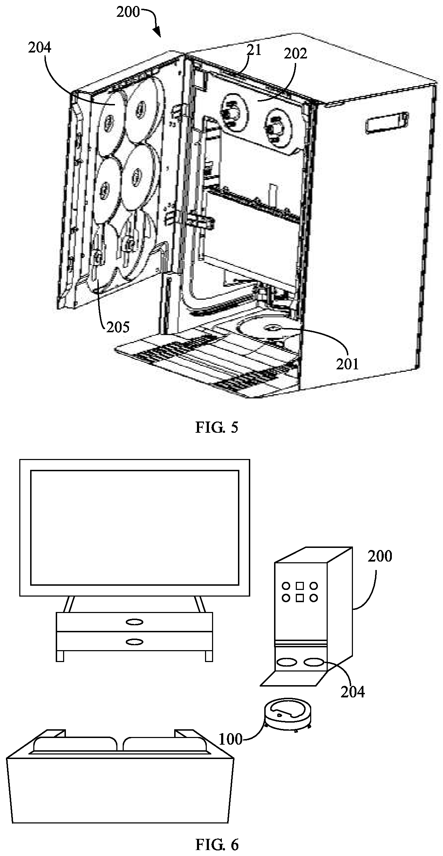

For example, FIG. 5 is a partial structural schematic diagram of a cleaning base station provided in an embodiment of the present application. As shown in FIG. 5, a cleaning base station 200 includes a receiving unit 201, a transport mechanism 202, a storage unit 205, and a second cleaning component 204. That is, the storage unit 205 stores the second cleaning component 204 to be replaced. The cleaning base station 200 also includes a drying apparatus 206 (not shown in the figure). The drying apparatus 206 includes an air outlet 21, which blows hot air toward the storage unit 205 to dry the cleaning component stored in the storage unit 205. It should be noted that the number and type of the cleaning component stored in the storage unit 205 are specifically limited in the embodiments of the present application. For example, before the cleaning robot 100 installs the first cleaning component 203, the first cleaning component 203 is also stored in the storage unit 205.

Optionally, the transport mechanism 202 includes a transport vehicle and a transport track. The transport track is bent to form a lifting section and a translation section. The transport vehicle may move along the lifting section to a side of the storage unit 205 and along the translation section to the top of the receiving unit 201. The transport vehicle is configured to transport the cleaning components.

The specific structure of the transport mechanism 202 is not specifically limited in the embodiments of the present application, and the transport mechanism 202 may transport the detached cleaning components from the receiving unit 201 to the storage unit 205, and transport the cleaning components to be installed from the storage unit 205 to the receiving unit 201.

Exemplarily, FIG. 6 is a schematic diagram of an application scenario provided in an embodiment of the present application. As shown in FIG. 6, the application scenario may be applied to a home scenario. Taking the cleaning robot 100 being a sweeping robot as an example, in a home environment, different rooms may have different materials of surfaces to be cleaned. For example, Bedroom 1 is a wooden floor, Bedroom 2 is a wooden floor, the living room is a ceramic tile floor, and the balcony is a ceramic tile floor. Each material may require a different cleaning component to achieve an ideal cleaning effect.

If the first cleaning component 203 currently installed on the sweeping robot is a cleaning component for cleaning wooden floors, and the cleaning base station 200 stores the second cleaning component 204 for cleaning ceramic tile floors, then after the sweeping robot completes cleaning of Bedroom 1 and Bedroom 2 using the first cleaning component 203 currently installed, the sweeping robot may be controlled to return to the cleaning base station 200 to perform the replacement with the second cleaning component 204 required for cleaning ceramic tile floors.

Specifically, after the sweeping robot returns to the cleaning base station 200 and completes the detachment of the first cleaning component 203, the sweeping robot is controlled to drive out of the cleaning base station 200. As shown in FIG. 6, after the sweeping robot is located outside the cleaning base station 200, it checks whether the second cleaning component 204 is present in the receiving unit 201, and if it is determined that the cleaning component in the receiving unit 201 is the second cleaning component 204, the sweeping robot is controlled to drive into the cleaning base station 200 to install the second cleaning component 204 in the receiving unit 201.

In this way, after cleaning Bedroom 1 and Bedroom 2 cleaned by using the first cleaning component 203, the sweeping robot is controlled to return to the cleaning base station 200 to perform the replacement with the second cleaning component used for cleaning the living room and the balcony. Through the optimization of the cleaning sequence, the time wasted by the sweeping robot cleaner due to frequent component replacement is reduced. Furthermore, the present application also checks the second cleaning component 204 outside the cleaning base station 200, only when it is confirmed that the cleaning component present in the receiving unit 201 is the second cleaning component 204, will the sweeping robot return to the cleaning base station 200 for component replacement, reducing unnecessary return times and further improving replacement efficiency, thereby improving the overall cleaning efficiency.

Optionally, if it is determined that the cleaning component in the receiving unit 201 is not the second cleaning component 204, a prompt message may be generated to alert the user of the abnormality. The user may then manually replace the cleaning component. The embodiments of the present application do not specifically limit the operations after the abnormality occurs. If it is further determined that the cleaning component in the receiving unit 201 is not the second cleaning component 204, the cleaning base station 200 may also be controlled to replace the cleaning component with the required second cleaning component 204.

It should be noted that the second cleaning component 204 may refer to any type of cleaning component different from the first cleaning component 203. The cleaning base station 200 may include at least one type of second cleaning component 204. The number and type of second cleaning components included in the cleaning base station 200 are not specifically limited in the embodiments of the present application.

It can be understood that the cleaning robot 100 may also be applied to shopping malls, schools, and offices. The specific application scenario is not limited in embodiments of the present application; and the above is only an example.

The technical solutions of the present application and how the technical solutions of the present application solve the above-mentioned technical problems are described in detail below with specific embodiments. The following specific embodiments may be combined with each other, and the same or similar concepts or processes may not be described again in certain embodiments. The embodiments of the present application will now be described with reference to the drawings.

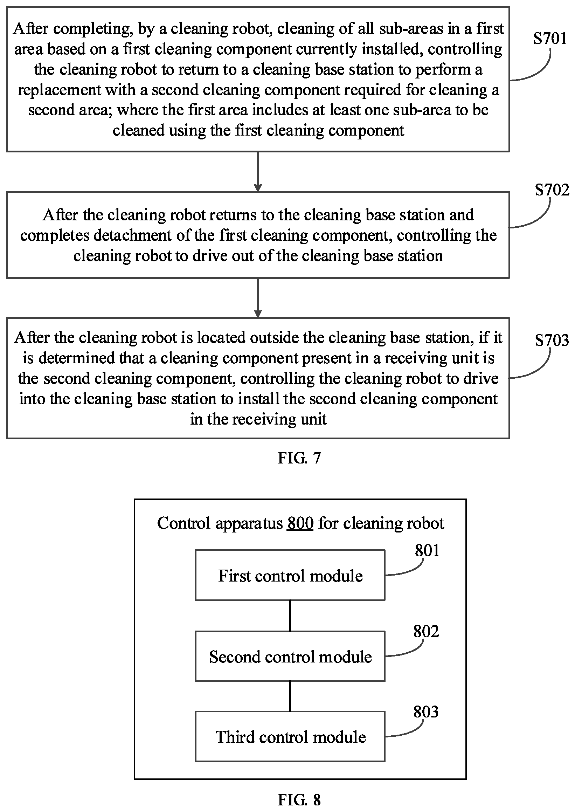

FIG. 7 is a flowchart illustrating a control method for a cleaning robot provided in an embodiment of the present application. As shown in FIG. 7, the control method for the cleaning robot is applied to a cleaning system; and the control method for the cleaning robot includes the following steps.

S701, after completing, by the cleaning robot, cleaning of all sub-areas in a first area based on a first cleaning component currently installed, controlling the cleaning robot to return to a cleaning base station to perform a replacement with a second cleaning component required for cleaning a second area; where the first area includes at least one sub-area to be cleaned using the first cleaning component.

The at least one sub-area included in the first area has a mapping relationship with the first cleaning component. This mapping relationship may be matched according to the material of the surface to be cleaned or the degree of dirtiness, that is, each sub-area is to be cleaned using the first cleaning component.

It should be noted that the second area may also include at least one sub-area to be cleaned using the second cleaning component. The number of sub-areas to be cleaned using the second cleaning component included in the second area is not specifically limited in this embodiment of the present application.

The sub-areas cleaned using the first cleaning component and the second cleaning component are different, and may be distinguished based on at least one of a material of a surface to be cleaned, a degree of dirtiness, geographical coordinates, a functional type of the area, etc.

Exemplarily, the cleaning robot completes the cleaning task of all the sub-areas in the first area based on the first cleaning component currently installed, and all the sub-areas in the first area are sub-areas to be cleaned using the first cleaning component. After completing the cleaning of the first area, the cleaning robot is controlled to return to the cleaning base station to perform detachment of the first cleaning component and replace it with the second cleaning component for performing the cleaning of the second area.

Optionally, before the cleaning robot has installed the first cleaning component or any cleaning components, the cleaning robot may be controlled to drive into the cleaning base station to perform the replacement with or install the first cleaning component required to perform cleaning of the first area.

S702, after the cleaning robot returns to the cleaning base station and completes detachment of the first cleaning component, controlling the cleaning robot to drive out of the cleaning base station.

In this step, after completing the cleaning task in the first area, the cleaning robot returns to the cleaning base station to prepare for the replacement of the cleaning component, that is, in the cleaning base station, the cleaning robot performs the detachment of the first cleaning component. This step is to remove the first cleaning component that is no longer needed and prepare for the installation of a new second cleaning component. Furthermore, after completing the detachment of the first cleaning component, the cleaning robot is controlled to drive out of the cleaning base station to ensure that the cleaning robot may perform the next component check or other operations outside the cleaning base station.

S703, after the cleaning robot is located outside the cleaning base station, if it is determined that a cleaning component present in a receiving unit is the second cleaning component, controlling the cleaning robot to drive into the cleaning base station to install the second cleaning component in the receiving unit.

In this step, after the cleaning robot completes the detachment of the first cleaning component and drives out of the cleaning base station, it stays outside the cleaning base station to confirm the cleaning component and ensure the accuracy of the installation of the second cleaning component. That is, it checks whether the second cleaning component is present in the receiving unit outside the cleaning base station. If it is confirmed that the second cleaning component is present in the receiving unit, the cleaning robot is controlled to re-enter the cleaning base station to install the second cleaning component. After the installation is completed, the cleaning robot is ready to perform the cleaning task of the second area.

It should be noted that the method for checking whether a second cleaning component is present in the receiving unit is not specifically limited in the embodiments of the present application, it may be based on a sensor inside the cleaning base station, such as installing a visual sensor inside the cleaning base station to recognize the cleaning component, or it may be based on a sensor on the body of the cleaning robot, such as detecting using an artificial intelligence (Artificial Intelligence, AI) camera.

Optionally, when the cleaning robot needs to replace or install the second cleaning component, the body of the cleaning robot is controlled to drive into the cleaning base station. After the cleaning robot is located in the cleaning base station, the cleaning robot drives its lifting structure to descend to a second preset position. After the lifting structure reaches the second preset position, the second cleaning component is installed on the cleaning robot. After installation, the cleaning robot drives to the second area and begins to perform the cleaning task.

The cleaning robot drives the lifting structure to descend to the second preset position, so that the cleaning component may be accurately connected to the body of the cleaning robot, ensuring the stability and correctness of the installation. The installation process may include mechanical retention or other fixing manners to ensure that the cleaning component may not loosen during subsequent cleaning. The specific installation process is not limited in the embodiments of the present application, and it may refer to existing installation methods or redefine new installation methods.

Since the cleaning requirements of each cleaning area are different, using appropriate cleaning components to clean each sub-area can ensure ideal cleaning results. Moreover, in the present application, the cleaning robot is controlled to return to the cleaning base station to perform the replacement with the second cleaning component for the next cleaning area only after all the sub-areas to be cleaned using the first cleaning component have been cleaned, which optimizes the cleaning sequence of the cleaning robot, so that the cleaning robot can complete the cleaning tasks more efficiently, reducing unnecessary frequency and time wasted on cleaning component replacements. Furthermore, the present application also requires checking and confirming the second cleaning component outside the cleaning base station to ensure returning to the cleaning base station for installation only when the cleaning component present in the receiving unit is the second cleaning component, which avoids unnecessary entry and exit operations to the cleaning base station, reduces energy consumption and time waste, optimizes the replacement process of the cleaning components, and thus improves overall operational efficiency and cleaning efficiency.

Furthermore, through intelligent cleaning component confirmation and replacement processes, the cleaning system not only demonstrates a high level of autonomy and intelligence, reducing reliance on manual intervention, but also can ensure that the cleaning task for each cleaning area is performed using the correct cleaning component, improving cleaning effects and meeting the cleaning requirements of different areas.

Optionally, the cleaning areas corresponding to the first cleaning component and the second cleaning component are determined by at least one of the following manners:
determining based on position information of the cleaning areas corresponding to the first cleaning component and the second cleaning component;
determining based on material information of surfaces to be cleaned in the cleaning areas corresponding to the first cleaning component and the second cleaning component;
determining based on a degree of dirtiness of the surfaces to be cleaned in the cleaning areas corresponding to the first cleaning component and the second cleaning component; and
determining based on functional information of the cleaning areas corresponding to the first cleaning component and the second cleaning component.

In the embodiments of the present application, the cleaning area may be divided according to its geographic position information. For example, a specific floor or room may be designated as an area for using a certain type of cleaning component. This manner relies on a preset map and position markers.

The cleaning areas may also be divided according to the material information of the surfaces to be cleaned, such as the material type. For example, different materials such as wooden floors, ceramic tiles and carpets require different types of cleaning components. This manner relies on the recognition and classification of the materials in the cleaning area.

The cleaning areas may also be divided according to their degree of dirtiness. For example, heavily soiled areas require more powerful cleaning components than lightly soiled areas. This manner relies on a sensor to detect the degree of dirtiness.

The cleaning areas may also be divided according to their functional information, such as functional use. For example, kitchens, toilets, and bathrooms may require different types of cleaning components. This manner relies on an understanding and classification of the function of the area.

Optionally, the first cleaning component and the second cleaning component are cleaning components with different cleaning performance, and/or the first cleaning component and the second cleaning component are cleaning components with different performance parameters. In this way, by designing different cleaning parameters and cleaning performance, different cleaning experiences may be provided for different cleaning areas.

It can be understood that the same type of cleaning components may have the same cleaning parameter, and the cleaning component used by different cleaning areas may be the same type of cleaning component. Different types of cleaning components may have different cleaning parameters, so that different cleaning performance may be provided.

Optionally, the first cleaning component and the second cleaning component may be distinguished by different identifiers, including at least one of color identifiers and pattern identifiers.

Exemplarily, different identifiers correspond to different types of cleaning components, or different identifiers correspond to cleaning components with different cleaning parameters or cleaning performance. For example, black corresponds to a type of a mop component for cleaning ceramic tiles, white corresponds to a type of a mop component for cleaning wooden floors, and gray corresponds to a type of a mop component for cleaning carpets.

Since the cleaning system may recognize multiple types of identifiers, different sign solutions and component types may be designed according to different user or scenario requirements, thereby improving the flexibility of the application.

Optionally, when the cleaning performances of the first cleaning component and the second cleaning component are different, the first cleaning component and the second cleaning component are at least partially different in terms of cleaning power, water retention power, and heat retention capacity. For example, the first cleaning component is a high water retention mop type, and the second cleaning component is a high cleaning mop type, and the two are used to clean different types of cleaning areas, respectively.

In some embodiments, the kitchen area corresponds to a high-cleaning mop type with strong scraping, the bathroom area corresponds to a high-water-retention mop type, and the balcony area corresponds to a phase-change mop type. The high-cleaning mop type, combined with the use of cleaning liquid, may be used for deep cleaning. It has high friction and is especially suitable for friction-resistant surfaces such as ceramic tiles. The high-water-retention mop type may absorb surface liquid on the surface to be cleaned. The phase-change mop type may perform thermal-insulation cleaning. The types of cleaning components corresponding to the types of different areas are not specifically limited in the embodiments of the present application. The above is merely an exemplary description.

It should be noted that there is a mapping relationship between the types of cleaning components and different cleaning areas. This mapping relationship may be pre-configured by the user or intelligently generated by the cleaning system, and is not specifically limited in the embodiments of the present application.

Therefore, by determining the cleaning areas in multiple manners, it can flexibly adapt to the requirements of different application scenarios, so that the cleaning robot can adapt to a variety of different environments and cleaning requirements. Whether in homes, commercial or industrial settings, efficient cleaning services can be provided. Moreover, by accurately matching the cleaning components with area characteristics, the cleaning robot can complete cleaning tasks more efficiently, reducing unnecessary repetition and resource waste, and ensuring ideal cleaning effects, avoiding problems such as damage to the material of the surface to be cleaned or incomplete cleaning.

Optionally, after the completing, by the cleaning robot, the cleaning of all the sub-areas in the first area based on the first cleaning component currently installed, the controlling the cleaning robot to return to the cleaning base station to perform the replacement with the second cleaning component required for cleaning the second area includes:
determining the first area to be cleaned by the cleaning robot based on the first cleaning component currently installed based on a preset cleaning sequence;
controlling the cleaning robot to clean all the sub-areas in the first area based on the first cleaning component, and after cleaning is completed, determining the second area to be cleaned by the cleaning robot based on the preset cleaning sequence; and
controlling the cleaning robot to return to the cleaning base station to perform the replacement with the second cleaning component required for cleaning the second area.

The preset cleaning sequence may refer to the cleaning sequence set based on pre-planned cleaning tasks and pre-divided areas. The manner for determining the preset cleaning sequence is not limited in the embodiments of the present application.

Exemplarily, the cleaning system determines the first area to be cleaned by the first cleaning component currently installed on the cleaning robot according to the preset cleaning sequence. Further, the cleaning robot is controlled to clean all the sub-areas in the first area according to a preset path and strategy using the first cleaning component. After completing the cleaning of the first area, the cleaning system determines the second area to be cleaned by the cleaning robot needs based on the preset cleaning sequence, and this step ensures the continuity and efficiency of the cleaning tasks. Further, the cleaning robot is controlled to return to the cleaning base station to perform the replacement with the second cleaning component required for cleaning the second area. After the replacement is completed, the cleaning robot is ready to perform the cleaning task of the second area.

In this way, by presetting the cleaning sequence, the cleaning robot can perform the cleaning tasks in an orderly manner, reducing unnecessary repetition and time waste, improving overall cleaning efficiency. The preset cleaning sequence and cleaning component replacement process can ensure that resources are used rationally, reducing energy consumption and the time spent on frequent cleaning component replacement. In addition, the automated cleaning sequence and cleaning component replacement process reduce reliance on manual operation, lower labor costs and operational complexity. The orderly and efficient cleaning process can also improve user satisfaction, thereby providing a better user experience.

Optionally, the preset cleaning sequence may be determined in any one of the following manners:
after the cleaning robot completes mapping, generating the preset cleaning sequence for recognized cleaning areas based on cleaning components required for the cleaning areas;
in response to a voice control command from a user, generating the preset cleaning sequence for the cleaning areas, where the voice control command is used to adjust a cleaning component required for at least one cleaning area and a cleaning sequence of the at least one cleaning area;
in response to a configuration operation from the user on a terminal device, generating the preset cleaning sequence for the cleaning areas, where the configuration operation is used to configure the cleaning component required for at least one cleaning area and the cleaning sequence of the at least one cleaning area; and the terminal device establishes a communication connection with the cleaning robot; and
generating the preset cleaning sequence for the cleaning areas based on historical information of a cleaning component used after the last cleaning task is completed; and
where in each cleaning area, all sub-areas are grouped into one group and cleaned in a specific sequence, and a next group is cleaned after one group is completed.

In some embodiments, after the cleaning robot completes environmental mapping, the cleaning system may generate the preset cleaning sequence based on the recognized cleaning areas and their required cleaning components. Optionally, the recognized cleaning areas and their required cleaning components are determined based on map construction and environmental recognition capability of the cleaning robot.

In other embodiments, the user may adjust the cleaning component requirement and cleaning sequence of the cleaning area using the voice commands, and the cleaning system generates the corresponding cleaning sequence in response to these voice commands.

In still other embodiments, the user may perform configuration operations on the terminal device that establishes a communication connection with the cleaning robot to adjust the cleaning component requirement and cleaning sequence of the cleaning area, so that the cleaning system generates the cleaning sequence based on these configuration operations. Optionally, the terminal device may provide a flexible user interface and control options, which are not specifically limited in the embodiments of the present application.

Optionally, in absence of the configuration operation of the user, the application (APP) of the terminal device may also recommend the cleaning components for the cleaning areas. This recommendation manner may be determined based on mapping information.

In yet still other embodiments, the cleaning system may also generate a new cleaning sequence using the historical information of the cleaning component used after the last cleaning task is completed. For example, the cleaning area adapted to by the cleaning components used after the last cleaning task is completed will be cleaned first in the next cleaning, reducing the replacement time of the cleaning components.

Therefore, multiple manners for generating the cleaning sequence provide high flexibility, so that the cleaning system can adapt to different user requirements and environmental changes. For example, through voice control and the configuration of the terminal device, the user may easily adjust the cleaning sequence, improving user experience and satisfaction; and the cleaning sequence generation method based on mapping recognition and historical information can ensure the efficient execution of cleaning tasks, reducing unnecessary repetition and resource waste. In this way, the cleaning system can intelligently generate the cleaning sequence according to the multiple methods, demonstrating a high level of intelligence and reducing reliance on manual intervention. In addition, the grouping cleaning method of the sub-areas corresponding to each cleaning area ensures the systematic and orderly nature of cleaning tasks, thereby improving cleaning efficiency.

Optionally, the cleaning base station further includes a third cleaning component, the third cleaning component and the second cleaning component correspond to different cleaning areas, and the third cleaning component corresponds to a third area; and the method further includes:
after determining the second area to be cleaned by the cleaning robot based on the preset cleaning sequence, determining a first duration for the cleaning robot to return to the cleaning base station to perform the replacement with the second cleaning component and return to the second area, and determining a second duration for the cleaning robot to return to the cleaning base station to perform a replacement with the third cleaning component and return to the third area; where the third area is a cleaning area closest to the first area and/or the cleaning base station; and
determining a target cleaning component to be replaced by the cleaning robot based on the first duration and the second duration, to clean a target area based on the target cleaning component.

Exemplarily, the cleaning system determines the second area to be cleaned by the cleaning robot based on the preset cleaning sequence, and evaluates the duration required for the cleaning robot to return from the current area to the cleaning base station to perform the replacement with the second cleaning component and return to the second area, i.e., the first duration. At the same time, the cleaning system may also evaluate the time required for the cleaning robot to return to the cleaning base station to replace the third cleaning component and go to the third area, i.e., the second duration. The third area is the area closest to the first area and/or the cleaning base station. Further, based on the comparison of the first duration and the second duration, the cleaning system determines the target cleaning component to be replaced, that is, selects a strategy or path with shorter time, so that the cleaning robot can complete the cleaning task more efficiently. Then, the cleaning robot may go to the target area to perform the cleaning task according to the determined target cleaning component.

The target cleaning component may be the second cleaning component or the third cleaning component, and the third cleaning component and the second cleaning component correspond to different cleaning areas.

In this way, by comparing the duration of different paths, the cleaning system can select the path with the shortest duration, thereby improving cleaning efficiency and reducing unnecessary time waste. Moreover, the cleaning system may dynamically adjust the cleaning path and the cleaning component selection according to real-time situations, demonstrating a high degree of flexibility and adaptability. Therefore, through intelligent duration evaluation and cleaning component selection, the cleaning system can better utilize resources, reducing energy consumption and overall cleaning time, improving the completion speed of cleaning tasks, and further improving user satisfaction and providing a better user experience.

Optionally, after determining the first duration of the cleaning robot returning to the cleaning base station to perform the replacement with the second cleaning component and returning to the second area, the remaining power of the cleaning robot is acquired, and whether the remaining power supports the movement of the cleaning robot during the first duration and the execution of the cleaning task in the second area is judged. If it is determined that the remaining power is insufficient to support the movement of the cleaning robot during the first duration and the execution of the cleaning task in the second area, the cleaning robot is controlled to return to the cleaning base station for charging.

In this way, by ensuring sufficient power before starting a cleaning task, the cleaning system can ensure that the cleaning robot has enough power to complete the scheduled task, reducing task interruption caused by insufficient power. Therefore, by ensuring that the cleaning robot performs cleaning tasks with sufficient power, the reliability of the cleaning system and the stability of task execution are improved, and further, by reducing cleaning task interruptions caused by insufficient power, users can enjoy more continuous and efficient cleaning services, thus improving satisfaction.

Optionally, the determining the target cleaning component to be replaced by the cleaning robot based on the first duration and the second duration includes:
in a case where the first duration is less than or equal to the second duration, controlling the cleaning robot to return to the cleaning base station to perform the replacement with the second cleaning component, to clean the second area based on the second cleaning component; and
in a case where the first duration is greater than the second duration, controlling the cleaning robot to return to the cleaning base station to perform the replacement with the third cleaning component to clean the third area based on the third cleaning component, and to return to the cleaning base station to perform the replacement with the second cleaning component after cleaning of the third area is completed.

Exemplarily, the cleaning system evaluates the first duration required for the cleaning robot to return from the current area to the cleaning base station to perform the replacement with the second cleaning component and then return to the second area, at the same time, the cleaning system also evaluates the second duration required for the cleaning robot to return to the cleaning base station to perform the replacement with the third cleaning component and then proceed to the third area. If the first duration is less than or equal to the second duration, the cleaning robot is controlled to return to the cleaning base station to perform the replacement with the second cleaning component, so as to clean the second area based on the second cleaning component, which means that the cleaning task in the second area can be completed faster, optimizing cleaning efficiency. If the first duration is greater than the second duration, the cleaning robot is controlled to return to the cleaning base station to perform the replacement with the third cleaning component, so as to clean the third area based on the third cleaning component, which means that the cleaning task in the third area can be completed faster, and the cleaning system has selected a more efficient path. Furthermore, after cleaning of the third area based on the third cleaning component is completed, the cleaning robot is controlled to return to the cleaning base station to perform the replacement with the second cleaning component, and then clean the second area based on the second cleaning component.

In this way, by selecting the path with the shortest duration, the cleaning system can improve cleaning efficiency and reduce unnecessary time waste, and further by combining with replacing the appropriate cleaning components to clean the corresponding cleaning areas, the overall cleaning time can be reduced and the completion speed of cleaning tasks is improved. Therefore, this method reflects the intelligence level of the cleaning system, enabling it to make complex decisions autonomously and reducing the reliance on human intervention.

Optionally, the determining the first duration for the cleaning robot to return to the cleaning base station to perform the replacement with the second cleaning component and return to the second area includes:
determining a first path for the cleaning robot to return from a current position thereof to the cleaning base station, a second path for the cleaning robot to travel from the cleaning base station to the second area, and a driving speed of the cleaning robot;
determining a third duration to return to the cleaning base station based on a length of the first path and the driving speed and determining a fourth duration to travel to the second area based on a length of the second path and the driving speed;
estimating a fifth duration required for the cleaning robot to perform the replacement according to a previous replacement duration of the second cleaning component; and
determining the first duration based on the third duration, the fourth duration, the fifth duration, and a sixth duration; where the sixth duration is an average duration required for the cleaning robot to avoid living obstacles within a historical time period.

The driving speed may be a preset fixed value or a value dynamically adjusted according to environmental conditions, and the value of the driving speed is not specifically limited in the embodiments of the present application.

In the step of determining the first duration, the average time required for the cleaning robot to avoid living obstacles such as people or pets over a historical time period is also considered to more accurately reflect the time consumption in actual operation.

Optionally, the determining the second duration for the cleaning robot to return to the cleaning base station to perform the replacement with the third cleaning component and return to the third area includes:
determining the first path for the cleaning robot to return to the cleaning base station from a current position thereof, the third path for the cleaning robot to travel from the cleaning base station to the third area, and the driving speed of the cleaning robot; determining the third duration to return to the cleaning base station based on the length of the first path and the driving speed, and determining a seventh duration required to travel to the third area based on the length of the third path and the driving speed; estimating an eighth duration required for the cleaning robot to perform the replacement according to a previous replacement duration of the third cleaning component; and determining the second duration based on the third duration, the seventh duration, the eighth duration, and the sixth duration; where the sixth duration is the average time required for the cleaning robot to avoid living obstacles over the historical time period.

In this way, by comprehensively considering various factors such as the lengths of the paths, the driving speed, the replacement duration, and obstacle avoidance duration, the cleaning system can more accurately estimate the time required to perform the replacement with different cleaning components and return to the corresponding cleaning areas. This accurate time estimation helps to select appropriate cleaning component replacement strategies, reduce unnecessary waiting and delays, improve the cleaning efficiency and the completion speed of the tasks, and thus manage its operation process more efficiently, ensuring the efficient and smooth completion of cleaning tasks.

Optionally, the completing, by the cleaning robot, the cleaning of all the sub-areas in the first area based on the first cleaning component currently installed includes:
when performing traversal cleaning of all the sub-areas in the first area based on the first cleaning component, in a case where a first obstacle area is detected during a process of travelling from a current position to a target sub-area, cleaning the target sub-area by the cleaning robot based on the first cleaning component after passing the first obstacle area to complete the cleaning of all the sub-areas in the first area; where the first obstacle area is an obstacle area that the cleaning robot is capable of crossing.

Optionally, a height of the obstacle in the first obstacle area is less than a preset threshold, so that the cleaning robot may cross the obstacle.

Exemplarily, when the cleaning robot performs traversal cleaning of all the sub-areas in the first area based on the first cleaning component currently installed, in a process of travelling from the current position to the target sub-area, the cleaning robot may continuously detect obstacles on the path using a sensor. If the first obstacle area (such as a small threshold or a carpet edge) that the cleaning robot may cross is detected, the cleaning robot will attempt to cross the first obstacle area to continue to clean the target using the first cleaning component after passing the first obstacle area. The above process may be repeated until all reachable sub-areas in the first area are cleaned.

Optionally, if it is found that certain sub-areas are unreachable due to uncrossable obstacles during the cleaning process, the cleaning robot may return to the cleaning base station in advance, and after returning to the cleaning base station, perform the replacement with the second cleaning component suitable for cleaning the next cleaning area or replan the path to bypass the obstacle, so as to clean other sub-areas to be cleaned using the first cleaning component. The handling manner after the cleaning robot encounters an uncrossable obstacle is specifically limited in the embodiments of the present application; and the above is merely an exemplary description.

In this way, through intelligent obstacle detection and handling, the cleaning robot can ensure comprehensive cleaning of reachable areas, minimize omissions, and ensure the completion rate of cleaning tasks. Furthermore, by effectively handling obstacle areas, it reduces stagnation and detours caused by the obstacles, thereby improving overall cleaning efficiency. Therefore, by autonomously detecting and handling obstacle areas, the cleaning system demonstrates a high level of intelligence, enabling it to autonomously adapt to complex environments and perform tasks.

Optionally, the completing, by the cleaning robot, the cleaning of all the sub-areas in the first area based on the first cleaning component currently installed includes:
when performing traversal cleaning of all the sub-areas in the first area based on the first cleaning component, in a case where a second obstacle area is detected during a process of travelling from a current position to a target sub-area, determining whether there are other sub-areas to be cleaned using the first cleaning component; where the second obstacle area includes an area where an uncrossable obstacle is located and/or a restricted area formed based on the obstacle; and
in a case where it is determined that there are other sub-areas to be cleaned, cleaning the other sub-areas based on the first cleaning component.

Optionally, if the height of the obstacle in the second obstacle area is greater than or equal to the preset threshold, the cleaning robot cannot cross the obstacle or pass through the second obstacle area.

Exemplarily, when the cleaning robot performs traversal cleaning of all the sub-areas in the first area based on the first cleaning component currently installed, in a process of travelling from the current position to the target sub-area, the cleaning robot may continuously detect obstacles on the path using the sensor. If a second obstacle area is detected, including uncrossable obstacles such as walls, furniture, and restricted areas formed based on obstacles such as a bedroom area formed by a closed door, the cleaning system may evaluate whether there are other sub- areas to be cleaned using the first cleaning component. This step ensures that the cleaning task may continue even when obstacles are encountered. Furthermore, if there are other sub-areas to be cleaned, the cleaning robot may adjust the path to go to the other sub-areas to be cleaned and clean them based on the first cleaning component. This flexible adjustment ensures the continuity and efficiency of the cleaning task.

It can be understood that not all the sub-areas in the first area are reachable for cleaning. The present application prioritizes cleaning of reachable sub-areas in the first area, which can more effectively utilize the power of the cleaning robot and the cleaning components, reduce frequent returns to the cleaning base station for replacement of cleaning components, and avoid unnecessary waste of resources.

In this way, through intelligent obstacle detection and area adjustment, the cleaning robot can continue to perform the cleaning task. Even when encountering uncrossable obstacles, it can ensure that the task continues, demonstrating a high level of intelligence, and enabling it to autonomously adapt to complex environments and perform tasks. Moreover, by effectively handling obstacles and replanning the cleaning path, stagnation and detours caused by obstacles can be reduced, overall cleaning efficiency can be improved, and the cleaning robot can adapt to various environments and obstacle types, demonstrating a high degree of flexibility and adaptability.

Optionally, the method further includes:
in a case where it is determined that there are no other sub-areas to be cleaned, controlling the cleaning robot to return to the cleaning base station to perform the replacement with the second cleaning component required to perform cleaning of a next area.

In this step, the cleaning robot cleans the first area using the first cleaning component currently installed. During the cleaning process, the cleaning robot detects obstacles on the path and attempts to clean all reachable sub-areas. However, if the cleaning robot encounters a second obstacle area that is uncrossable during the cleaning process, it will check whether there are other sub-areas to be cleaned using the first cleaning component. If there are no other sub-areas to be cleaned, it means that there are no sub-areas to be cleaned using the first cleaning component or that the cleaning task of the first area cannot continue. Therefore, in a case where it is determined that there are no other sub-areas to be cleaned, the cleaning robot may be controlled to return to the cleaning base station to perform the replacement with the second cleaning component required to perform the cleaning of the next area.

It can be understood that not all the sub-areas in the first area are reachable for cleaning. If an unreachable sub-area is encountered, and it is determined that there are no sub-areas that still need to be cleaned using the first cleaning component, the cleaning base station may be returned in advance to perform the replacement with the second cleaning component used to clean the second area.

In this way, the cleaning robot can avoid wasting time and resources in unnecessary areas. This strategy ensures that the cleaning robot only cleans the areas that need it, thereby improving the overall cleaning efficiency. Furthermore, by performing the replacement with the second cleaning component suitable for the next cleaning area, the cleaning robot can handle different types of cleaning tasks more effectively. This flexibility ensures that each area can be appropriately cleaned, improving the cleaning effect. In addition, after determining that there are no other sub-areas to be cleaned, the cleaning robot directly returns to the cleaning base station to perform the replacement with the second cleaning component, which can reduce unnecessary movement and operation, thereby saving battery energy and extending the working time of the cleaning robot.

Optionally, the determining that the cleaning component present in the receiving unit is the second cleaning component includes:
determining that the second cleaning component is present in the receiving unit based on a recognition result of a recognition sensor; where a recognition range of the recognition sensor covers the second cleaning component in the receiving unit.

Exemplarily, when the cleaning robot needs to install a new cleaning component, locating the body of the cleaning robot outside the cleaning base station is to ensure that the recognition sensor on the cleaning robot may effectively cover and scan the cleaning component in the receiving unit within the cleaning base station to determine whether the cleaning component present in the receiving unit is the second cleaning component. If the recognition result indicates the presence of the second cleaning component, the cleaning system will confirm the presence of the second cleaning component and prepare to perform the corresponding installation operation.

It should be noted that by locating the cleaning robot outside the cleaning base station, the purpose is to allow the recognition sensor to obtain a good view to fully cover the cleaning component in the receiving unit, which helps to improve the accuracy and efficiency of recognition.

Optionally, if the recognition range of the recognition sensor of the cleaning robot located outside the cleaning base station is insufficient to cover the cleaning component in the receiving unit, that is, it cannot effectively recognize whether the cleaning component present in the receiving unit is the second cleaning component, the body may be controlled to rotate until the recognition range of the recognition sensor covers the cleaning component in the receiving unit, so as to recognize whether the cleaning component present in the receiving unit is the second cleaning component.

In this way, the recognition sensor obtains the appropriate viewing angle and distance to recognize the cleaning component, which can improve the accuracy of recognition. Accurate recognition helps to avoid misoperation caused by recognition errors, such as installing an unsuitable cleaning component, thereby reducing the possibility of cleaning task interruption and rework. In addition, the recognition sensor is integrated on the cleaning robot, rather than on the cleaning base station, which reduces the hardware complexity and cost of the cleaning base station, while improving the flexibility of the cleaning system.

Optionally, the method further includes:
when it is determined that a posture of the cleaning robot is not capable of recognizing the second cleaning component in the cleaning base station, controlling the cleaning robot to adjust the posture thereof so that the recognition sensor faces a direction in which it is capable of detecting the second cleaning component in the cleaning base station.

Exemplarily, when the cleaning robot attempts to recognize the second cleaning component in the cleaning base station, it may detect whether the current posture may effectively utilize the recognition sensor for detection. If it is determined that the current posture cannot recognize the cleaning component in the cleaning base station, the cleaning robot will perform posture adjustment, and after adjusting the posture, the recognition sensor scans the cleaning base station again to confirm whether the second cleaning component is present in the receiving unit.

It should be noted that, in the above cases, adjusting the posture of the cleaning robot by controlling the cleaning robot may include rotating or moving the robot so that the recognition sensor may face and cover the cleaning component in the cleaning base station. The posture adjustment process or the direction and angle of the posture adjustment are not specifically limited in the embodiments of the present application, as long as they can ensure that the recognition sensor can obtain a suitable viewing angle to accurately recognize and determine the type of cleaning component.

Posture adjustment helps avoid recognition errors caused by poor viewing angle of the recognition sensor, thereby reducing the risk of misoperation.

Optionally, if the current posture of the cleaning robot can recognize that the cleaning component in the cleaning base station is the second cleaning component, there is no need to adjust the posture, reducing unnecessary movement and improving work efficiency while reducing energy consumption.

In this way, by adjusting the posture to optimize the perspective of the recognition sensor, the accuracy of recognition can be improved, and the possibility of misrecognition and missed recognition can be reduced. Accurate recognition of the cleaning component can also reduce task interruption or delay caused by recognition errors, thereby improving the overall cleaning efficiency. Moreover, posture adjustment enables the cleaning robot to adapt to different environments and cleaning station layouts, demonstrating a high degree of flexibility and adaptability.

Optionally, the controlling the cleaning robot to drive into the cleaning base station includes:
in a case where it is determined that the second cleaning component is present in the receiving unit, controlling the cleaning robot to adjust the posture thereof again so that the cleaning robot faces a direction in which the cleaning robot is dockable with the cleaning base station, and controlling the cleaning robot to drive into the cleaning base station.

Exemplarily, the cleaning system confirms the presence of a second cleaning component in the receiving unit by using the recognition sensor to ensure that the cleaning robot has recognized the required cleaning component before entering the cleaning base station. After confirming the presence of the second cleaning component, the cleaning system controls the cleaning robot to adjust the posture thereof again so that the cleaning robot faces the direction in which the cleaning robot is dockable with the cleaning base station. Furthermore, after the posture adjustment is completed, the cleaning system controls the cleaning robot to drive into the cleaning base station to achieve a smooth docking.

It should be noted that, taking a direction in which the cleaning robot moves forward as the front, the cleaning robot is located behind the cleaning base station and may move forward to drive out of the cleaning base station or move backward to drive into the cleaning base station.

In this way, by adjusting the posture again, it can be ensured that the cleaning robot successfully docks with the cleaning base station, reducing errors and failure risks during docking. This posture adjustment and automatic docking process reduces the installation time of the cleaning component and improves the efficiency of replacing and installing the cleaning component. Therefore, by autonomously adjusting the posture and returning to the cleaning base station for docking, the present application may demonstrate a high level of intelligence. It may autonomously adapt to complex environments and perform tasks, thereby improving the user experience. In addition, accurate docking can also reduce task interruption or delay caused by docking failure, improving overall operational efficiency.

Optionally, the method further includes:
after the cleaning robot drives out of the cleaning base station, controlling the transport mechanism to pick up the first cleaning component from the receiving unit and control the transport mechanism to transport the picked-up first cleaning component to a storage unit; and controlling the transport mechanism to retrieve the second cleaning component from the storage unit and transport the second cleaning component to the receiving unit for installing by the cleaning robot; and
after the first cleaning component is transported to the storage unit, controlling an air outlet of a drying apparatus to open to dry the first cleaning component.

Exemplarily, after the cleaning robot drives out of the cleaning base station, the transportation mechanism of the cleaning base station may pick up the detached first cleaning component from the receiving unit, and then transports the picked-up first cleaning component to the storage unit of the cleaning base station for storage. At the same time, the transportation mechanism retrieves the second cleaning component from the storage unit and transports the second cleaning component to the receiving unit, to prepare for the cleaning robot to install. Further, after the first cleaning component is transported to the storage unit, the cleaning base station controls the air outlet of the drying apparatus to open, with the air outlet facing the storage unit, to provide hot air to dry the first cleaning component, and this process ensures that the cleaning component remains dry during storage, preventing the growth of mold and bacteria. The above drying process occurs during the replacement of the cleaning component.

Therefore, the present application can dry the detached first cleaning component during the replacement of the second cleaning component, which can effectively utilize time, reduce the downtime of the cleaning robot, improve the overall operating efficiency, and simultaneously replace and dry the component to better utilize the resources and functions of the cleaning base station, avoid resource idleness, and improve the utilization efficiency of the cleaning robot.

In addition, by replacing and drying the cleaning components midway through the process, it can be ensured that the first cleaning component is ready for reuse in the shortest possible time, thereby improving the task turnaround speed of the cleaning robot.

Optionally, the method further includes:
after completing the detachment of the first cleaning component, if it is determined that the cleaning robot is still connected to the first cleaning component, and /or if it is determined that the first cleaning component is not present in the receiving unit, generating first abnormality information and/or repeating the detachment of the first cleaning component.

Exemplarily, after the cleaning robot completes the detachment of the first cleaning component, the cleaning system will perform a detection to confirm whether the detachment is successful. It usually checks the following two situations: first, whether the cleaning robot is still connected to the first cleaning component, and this detection may be performed by a sensor or mechanical feedback to confirm whether the cleaning component is still connected to the cleaning robot; second, whether the first cleaning component is present in the receiving unit, and this detection may be performed by the sensor of the cleaning base station to confirm whether the receiving unit has received the detached cleaning component.

If any one of the above abnormal situations is detected, the cleaning system may generate the first abnormality information, which may include an error code, an alarm notification, a text message notification, etc., to prompt the user or the cleaning system to intervene. Alternatively, the cleaning system may also choose to repeat the detachment of the first cleaning component again to attempt to correct the abnormal situation.

Optionally, the detachment of the first cleaning component by the cleaning robot may be completed through a robotic arm or other automated apparatus such as a lifting mechanism. The specific process corresponding to the detachment of is not limited in the embodiments of the present application.

Exemplarily, after the cleaning robot returns to the cleaning base station, it activates its internal lifting structure to raise the lifting structure to the first preset position. At this time, the connection between the first cleaning component and the cleaning robot is released. Then, due to gravity or the design of the cleaning base station, the first cleaning component naturally falls into the receiving unit located at a bottom of the cleaning base station. Furthermore, after the first cleaning component successfully falls into the receiving unit, the cleaning robot is controlled to drive out of the cleaning base station.

It should be noted that the above detachment process is only an exemplary description. The specific detachment process is not limited in the embodiments of the present application, and may refer to existing detachment manners or redefine new detachment manners.

Therefore, by automatically detecting and handling abnormal situations, the cleaning system may promptly recognize and correct problems during detaching, which improves the operational reliability of the cleaning robot, and reduces subsequent problems caused by improper detachment of the cleaning components; and the user can understand the status of the cleaning system in a timely manner through the first abnormality information and take necessary measures to intervene, providing a more efficient and transparent operating experience and improving user satisfaction.

In addition, the cleaning system can automatically recognize and handle abnormal situations during the detachment process, improving the reliability and availability of the cleaning system and demonstrating a high level of intelligence.

Optionally, the cleaning base station further includes a storage unit that is configured to store the first cleaning component and the second cleaning component; and the method further includes:
after the transport mechanism completes an action of transporting the second cleaning component from the storage unit to the receiving unit, if it is determined that the cleaning component present in the receiving unit is not the second cleaning component, generating second abnormality information and/or controlling the transport mechanism to perform an action of transporting the second cleaning component from the storage unit to the receiving unit again.

Exemplarily, after the transportation operation of the transportation mechanism is completed, the cleaning system will detect whether the second cleaning component is present in the receiving unit. If it is detected that the cleaning component present in the receiving unit is not the second cleaning component, the cleaning system may generate the second abnormality information, or may choose to control the transportation mechanism to perform the action of transporting the second cleaning component from the storage unit to the receiving unit again in an attempt to correct the abnormality.

The definition of second abnormality information is similar to that of the first abnormality information, and is not repeated here. For details, reference may be made to the description of the first abnormality information. One of the two is to alert the abnormal detachment of the first cleaning component, and the other is to alert the abnormal transportation of the second cleaning component.

In this way, by detecting and handling abnormal situations during transportation, the cleaning system can recognize and correct problems in a timely manner, which improves the operational reliability of the cleaning base station, reduces subsequent problems caused by improper transportation of the cleaning component; and the user can understand the status of the cleaning system in a timely manner through the second abnormality information and take necessary measures to intervene, which provides a more efficient and transparent operating experience and improves user satisfaction.

In addition, the cleaning system can automatically recognize and handle abnormal situations during transportation, demonstrating a high level of intelligence and improving the adaptability of the cleaning base station in complex environments.

Optionally, the cleaning base station further includes a storage unit that is configured to store the first cleaning component and the second cleaning component; and the method further includes:
before determining that the second cleaning component is present in the receiving unit, controlling the transport mechanism to retrieve the second cleaning component from the storage unit, and controlling the transport mechanism to transport the retrieved second cleaning component to the receiving unit; and
after it is determined that the second cleaning component is located in the receiving unit, controlling the transport mechanism to leave a position corresponding to the receiving unit.

In the embodiment of the present application, the cleaning system may detect whether the second cleaning component is present in the receiving unit. For example, if it is detected that the second cleaning component is not present in the receiving unit, the cleaning system will instruct the transport mechanism to retrieve a new second cleaning component from the storage unit, and the transport mechanism is responsible for transporting the retrieved second cleaning component to the receiving unit. Furthermore, after the cleaning system judges whether the transport mechanism has successfully placed the second cleaning component in the receiving unit, if it is confirmed that the position of the cleaning component is correct, the transport mechanism leaves the position corresponding to the receiving unit to make space for subsequent installation operations.

In this way, by automatically detecting the status of the component in the receiving unit and timely retrieving the cleaning component to be installed, the cleaning robot may be ensured to quickly return to the working state, reducing downtime. Furthermore, through the automated in-situ detection and cleaning component replacement process described above, the cleaning robot can perform the cleaning tasks more quickly, improving the utilization rate and task turnover rate of the cleaning robot.

In the aforementioned embodiments, the control methods for the cleaning robot provided in the embodiments of the present application are introduced. To achieve the functions of the methods provided in the embodiments of the present application, the cleaning system, as the executing entity, may include hardware structures and/or software modules, and the above functions are implemented in the form of hardware structures, software modules, or a combination of hardware structures and software modules. Whether a certain function is executed in the form of hardware structures, software modules, or a combination of hardware structures and software modules depends on the specific application and design constraints of the technical solutions.

For example, FIG. 8 is a structural schematic diagram of a control apparatus for a cleaning robot provided in an embodiment of the present application. As shown in FIG. 8, the control apparatus 800 for the cleaning robot is applied to a cleaning system. The cleaning system includes the cleaning robot and a cleaning base station. The cleaning base station includes a receiving unit, a transport mechanism, a first cleaning component, and a second cleaning component. The first cleaning component and the second cleaning component correspond to different cleaning areas. The receiving unit is configured to receive a cleaning component detached from the cleaning robot, and to receive a cleaning component to be installed on the cleaning robot. The control apparatus 800 for the cleaning robot includes:
a first control module 801, configured to, after completing, by the cleaning robot, cleaning of all sub-areas in a first area based on the first cleaning component currently installed, control the cleaning robot to return to the cleaning base station to perform a replacement with the second cleaning component required for cleaning a second area; where the first area includes at least one sub-area to be cleaned using the first cleaning component;
a second control module 802, configured to, after the cleaning robot returns to the cleaning base station and completes detachment of the first cleaning component, control the cleaning robot to drive out of the cleaning base station; and
a third control module 803, configured to, after the cleaning robot is located outside the cleaning base station, if it is determined that a cleaning component present in the receiving unit is the second cleaning component, control the cleaning robot to drive into the cleaning base station to install the second cleaning component in the receiving unit.

Optionally, the cleaning areas corresponding to the first cleaning component and the second cleaning component are determined by at least one of the following manners:
determining based on position information of the cleaning areas corresponding to the first cleaning component and the second cleaning component;
determining based on material information of surfaces to be cleaned in the cleaning areas corresponding to the first cleaning component and the second cleaning component;
determining based on a degree of dirtiness of the surfaces to be cleaned in the cleaning areas corresponding to the first cleaning component and the second cleaning component; and
determining based on functional information of the cleaning areas corresponding to the first cleaning component and the second cleaning component.

Optionally, the first control module 801 is specifically configured to:
determine the first area to be cleaned by the cleaning robot based on the first cleaning component currently installed based on a preset cleaning sequence;
control the cleaning robot to clean all the sub-areas in the first area based on the first cleaning component, and after cleaning is completed, determine the second area to be cleaned by the cleaning robot based on the preset cleaning sequence; and
control the cleaning robot to return to the cleaning base station to perform the replacement with the second cleaning component required for cleaning the second area.

Optionally, the preset cleaning sequence is determined by any one of the following manners:
after the cleaning robot completes mapping, generating the preset cleaning sequence for recognized cleaning areas based on cleaning components required for the cleaning areas;
in response to a voice control command from a user, generating the preset cleaning sequence for the cleaning areas, where the voice control command is used to adjust a cleaning component required for at least one cleaning area and a cleaning sequence of the at least one cleaning area;
in response to a configuration operation from the user on a terminal device, generating the preset cleaning sequence for the cleaning areas, where the configuration operation is used to configure the cleaning component required for at least one cleaning area and the cleaning sequence of the at least one cleaning area; and the terminal device establishes a communication connection with the cleaning robot; and
generating the preset cleaning sequence for the cleaning areas based on historical information of a cleaning component used after the last cleaning task is completed; and
where in each cleaning area, all sub-areas are grouped into one group and cleaned in a specific sequence, and a next group is cleaned after one group is completed.

Optionally, the cleaning base station further includes a third cleaning component, the third cleaning component and the second cleaning component correspond to different cleaning areas, and the third cleaning component corresponds to a third area; and the control apparatus 800 for the cleaning robot further includes a fourth control module, which is configured to:
after determining the second area to be cleaned by the cleaning robot based on the preset cleaning sequence, determine a first duration for the cleaning robot to return to the cleaning base station to perform the replacement with the second cleaning component and return to the second area, and determine a second duration for the cleaning robot to return to the cleaning base station to perform a replacement with the third cleaning component and return to the third area; where the third area is a cleaning area closest to the first area and/or the cleaning base station; and
determine a target cleaning component to be replaced by the cleaning robot based on the first duration and the second duration, to clean a target area based on the target cleaning component.

Optionally, the fourth control module includes a first determining unit, which is configured to:
in a case where the first duration is less than or equal to the second duration, control the cleaning robot to return to the cleaning base station to perform the replacement with the second cleaning component, to clean the second area based on the second cleaning component; and
in a case where the first duration is greater than the second duration, control the cleaning robot to return to the cleaning base station to perform the replacement with the third cleaning component to clean the third area based on the third cleaning component, and to return to the cleaning base station to perform the replacement with the second cleaning component after cleaning of the third area is completed.

Optionally, the fourth control module includes a second determining unit, which is configured to:
determine a first path for the cleaning robot to return from a current position thereof to the cleaning base station, a second path for the cleaning robot to travel from the cleaning base station to the second area, and a driving speed of the cleaning robot;
determine a third duration to return to the cleaning base station based on a length of the first path and the driving speed and determining a fourth duration to travel to the second area based on a length of the second path and the driving speed;
estimate a fifth duration required for the cleaning robot to perform the replacement according to a previous replacement duration of the second cleaning component; and
determine the first duration based on the third duration, the fourth duration, the fifth duration, and a sixth duration; where the sixth duration is an average duration required for the cleaning robot to avoid living obstacles within a historical time period.

Optionally, the control apparatus 800 of the cleaning robot further includes a first cleaning module, which is configured to:
when performing traversal cleaning of all the sub-areas in the first area based on the first cleaning component, in a case where a first obstacle area is detected during a process of travelling from a current position to a target sub-area, clean the target sub-area by the cleaning robot based on the first cleaning component after passing the first obstacle area to complete the cleaning of all the sub-areas in the first area; where the first obstacle area is an obstacle area that the cleaning robot is capable of crossing.

Optionally, the control apparatus 800 of the cleaning robot further includes a second cleaning module, which is configured to:
when performing traversal cleaning of all the sub-areas in the first area based on the first cleaning component, in a case where a second obstacle area is detected during a process of travelling from a current position to a target sub-area, determine whether there are other sub-areas to be cleaned using the first cleaning component; where the second obstacle area includes an area where an uncrossable obstacle is located and/or a restricted area formed based on the obstacle; and
in a case where it is determined that there are other sub-areas to be cleaned, clean the other sub-areas to be cleaned based on the first cleaning component.

Optionally, the control apparatus 800 of the cleaning robot further includes a fifth control module, which is configured to:
in a case where it is determined that there are no other sub-areas to be cleaned, control the cleaning robot to return to the cleaning base station to perform the replacement with the second cleaning component required to perform cleaning of a next area.

Optionally, the cleaning robot includes a body and a recognition sensor that is configured to recognize a presence of the second cleaning component in the receiving unit; and the third control module 803 includes a third determining unit, which is configured to:
determine that the second cleaning component is present in the receiving unit based on a recognition result of the recognition sensor; where a recognition range of the recognition sensor covers the second cleaning component in the receiving unit.

Optionally, the control unit 800 of the cleaning robot further includes a sixth control module, which is configured to:
when it is determined that a posture of the cleaning robot is not capable of recognizing the second cleaning component in the cleaning base station, control the cleaning robot to adjust the posture thereof so that the recognition sensor faces a direction in which it is capable of detecting the second cleaning component in the cleaning base station.

Optionally, the third control module 803 includes a control unit, which is configured to:
in a case where it is determined that the second cleaning component is present in the receiving unit, control the cleaning robot to adjust the posture thereof again so that the cleaning robot faces a direction in which the cleaning robot is dockable with the cleaning base station, and control the cleaning robot to drive into the cleaning base station.

Optionally, the cleaning base station further includes a storage unit and a drying apparatus, the storage unit is configured to store the first cleaning component and the second cleaning component, and the drying apparatus includes an air outlet facing the storage unit for providing hot air to the storage unit. The control apparatus 800 of the cleaning robot further includes a seventh control module, which is configured to:
after the cleaning robot drives out of the cleaning base station, control the transport mechanism to pick up the first cleaning component from the receiving unit and control the transport mechanism to transport the picked-up first cleaning component to the storage unit; and control the transport mechanism to retrieve the second cleaning component from the storage unit and transport the second cleaning component to the receiving unit for installing by the cleaning robot; and
after the first cleaning component is transported to the storage unit, control the air outlet of the drying apparatus to open to dry the first cleaning component.

Optionally, the control apparatus 800 of the cleaning robot further includes a first determining module, which is configured to:
after completing the detachment of the first cleaning component, if it is determined that the cleaning robot is still connected to the first cleaning component, and/or if it is determined that the first cleaning component is not present in the receiving unit, generate first abnormality information and/or repeat the detachment of the first cleaning component.

Optionally, the cleaning base station further includes a storage unit that is configured to store the first cleaning component and the second cleaning component; the control apparatus 800 of the cleaning robot further includes a second determining module, which is configured to:
after the transport mechanism completes an action of transporting the second cleaning component from the storage unit to the receiving unit, if it is determined that the cleaning component present in the receiving unit is not the second cleaning component, generate second abnormality information and/or control the transport mechanism to perform an action of transporting the second cleaning component from the storage unit to the receiving unit again.

Optionally, the cleaning base station further includes a storage unit that is configured to store the first cleaning component and the second cleaning component; and the control apparatus 800 of the cleaning robot further includes an eighth control module, which is configured to:
before determining that the second cleaning component is present in the receiving unit, control the transport mechanism to retrieve the second cleaning component from the storage unit, and control the transport mechanism to transport the retrieved second cleaning component to the receiving unit; and
after it is determined that the second cleaning component is located in the receiving unit, control the transport mechanism to leave a position corresponding to the receiving unit.

It should be noted that the specific implementation principle and effects of the control apparatus of the cleaning robot described above may refer to the relevant description and effects of the embodiments described above, and will not be repeated here.

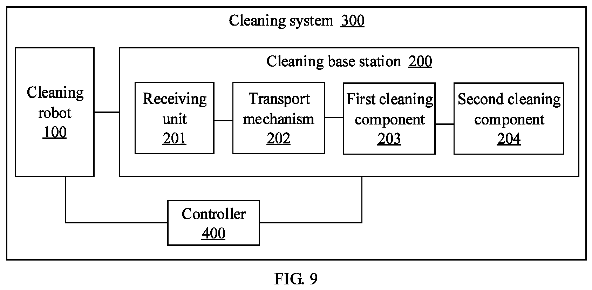

Exemplarily, the embodiments of the present application also provide a controller. FIG. 9 is a structural schematic diagram of a controller provided in an embodiment of the present application. As shown in FIG. 9, the controller 400 is deployed in a cleaning system 300. The cleaning system 300 includes a cleaning robot 100 and a cleaning base station 200. The cleaning base station 200 includes a receiving unit 201, a transport mechanism 202, a first cleaning component, and a second cleaning component. The receiving unit 201 is configured to receive a cleaning component detached from the cleaning robot 100 and to receive a cleaning component to be installed on the cleaning robot 100.

The controller 400 is configured to execute the method as described in any one of the embodiments described above.

The controller 400 described above may include a microcontroller unit (Microcontroller Unit, MCU). Of course, the controller 400 may further include other devices that can have control functions.

It should be noted that the specific implementation principle and effects of the controller 400 may refer to the relevant description and effects corresponding to the embodiments described above, and will not be repeated here.

The embodiments of the present application also provides a computer-readable storage medium storing computer-executable instructions which, when executed by a processor, are configured to implement the methods described in any one of the foregoing embodiments of the present application.

The embodiments of the present application also provides a chip for executing instructions, which is configured to perform the method described in any one of the foregoing embodiments of the present application as executed by a cleaning apparatus or cleaning system.

The embodiments of the present application also provides a computer program product, which includes a computer program that, when executed by a processor, may implement the methods described in any one of the foregoing embodiments of the present application as performed by a cleaning apparatus or cleaning system.

In the several embodiments provided in the present application, it should be understood that the disclosed apparatuses and methods may be implemented in other ways. For example, the apparatus embodiments described above are only schematic. For example, the division of the modules is only a logical function division. In actual implementation, there may be another division manner. For example, multiple units or components may be combined or integrated into another system, or some features can be ignored or not implemented. In addition, the displayed or discussed mutual coupling or direct coupling or communication connection may be indirect coupling or communication connection through some interfaces, devices or modules, which may be electrical, mechanical or other forms.

The units described as separate parts may or may not be physically separated, and the parts displayed as modules may or may not be physical units, that is, may be located in one place, or may be distributed on multiple network units. Some or all of the units may be selected according to actual needs to achieve the objective of the solution of this embodiment.

In addition, the functional units in the embodiments of the present application may be integrated into one processing unit, or the units may exist separately physically, or two or more units may be integrated into one unit. The above integrated unit may be implemented in the form of hardware, or in the form of a combination of hardware and software functional units.

The integrated modules implemented as software functional modules described above may be stored in a computer-readable storage medium. The above software functional modules are stored in a storage medium, and include several instructions to make a computer device (which may be a personal computer, a server, a network device, etc.) or a processor to execute some of the steps of the methods in various embodiments of the present application.

It should be understood that the aforementioned processor may be a central processing unit (Central Processing Unit, CPU for short), or other general-purpose processors, a digital signal processor (Digital Signal Processor, DSP for short), an application specific integrated circuit (Application Specific Integrated Circuit, ASIC for short), etc. The general processor may be a microprocessor or the processor may be any conventional processor, etc. The steps of the method disclosed in combination with the application may be directly embodied as the completion of execution by a hardware processor, or the completion of execution by a combination of hardware and software modules in the processor

The memory may include a high speed random access memory (Random Access memory, RAM for short), or a non-volatile memory (Non-volatile Memory, NVM for short) such as at least one disk memory, or may be a USB flash disk, a mobile hard disk, a read-only memory, a magnetic disk or an optical disk.

The bus may be an industry standard architecture (Industry Standard Architecture, ISA for short) bus, a peripheral component interconnect (Peripheral Component Interconnect, PCI for short) bus or an extended industry standard architecture (Extended Industry Standard Architecture, EISA for short) bus, etc. The bus may be divided into an address bus, a data bus, a control bus, etc. For the convenience of representation, the bus in the drawings of the present application is not limited to only one bus or one type of bus.

The aforementioned storage media may be implemented by any type of volatile or nonvolatile storage device or their combination, such as a static random-access memory (Static Random-Access Memory, SRAM for short), an electrically-erasable programmable read-only memory (Electrically Erasable Programmable Read Only Memory, EEPROM for short), an erasable programmable read only memory (Electrically Erasable Programmable Read Only Memory, EPROM for short), a programmable read-only memory (Programmable Read-Only Memory, PROM for short), a read-only memory (Read-Only Memory, ROM for short), a magnetic memory, a flash memory, a magnetic disk or an optical disk. The storage medium may be any available medium that can be accessed by a general-purpose or special-purpose computer.

An exemplary storage medium is coupled to a processor, so that the processor can read information from and write information to the computer-readable storage medium. Of course, the storage medium may also be a constituent part of the processor. The processor and the storage medium may be located in application specific integrated circuits (Application Specific Integrated Circuits, ASIC for short). Of course, the processor and the storage medium may also exist in a communication device as discrete components.

It should be noted that, for the sake of simplicity, the foregoing method embodiments are all described as a series of actions. However, those skilled in the art should understand that the present application is not limited by the described sequence of actions, as some steps may be performed in other sequences or simultaneously according to the present application. Furthermore, those skilled in the art should also understand that the embodiments described in the specification are all optional embodiments, and the actions and modules involved are not necessarily essential to the present application.

It should be further noted that although the steps in the flowchart in the above embodiments are displayed in sequence as indicated by the arrows, these steps are not necessarily executed in sequence as indicated by the arrows. Unless explicitly stated herein, the execution of these steps is not strictly limited in order, and they may be executed in other orders. Moreover, at least a part of the steps in the drawings may include a plurality of sub-steps or stages, which may not necessarily be completed at the same time, but may be executed at different times, and the execution sequence may not necessarily be sequential, but may be executed in turn or alternately with other steps or at least a part of sub-steps or stages of other steps.

In the embodiments described above, the descriptions of the embodiments have their own emphasis. For parts not described in detail in a certain embodiment, reference may be made to the relevant descriptions of other embodiments. The technical features of the embodiments described above may be combined arbitrarily. For the sake of brevity of the description, not all possible combinations of the technical features in the embodiments described above are described. However, as long as the combination of these technical features does not contradict each other, it should be considered within the scope of this specification.

It is easy for those skilled in the art to conceive of other embodiments of the present application after considering the specification and practicing the invention disclosed herein. The present application is intended to cover any variations, use or adaptive changes of the present application, which follow the general principles of the present application and include common sense or conventional technical means in the art that are not disclosed in the present application. The specification and the embodiments are regarded as exemplary only, with the true scope and spirit of the present application being indicated by the following claims.

The above descriptions are merely specific implementations of the embodiments of the present application, but the protection scope of the embodiments of the present application is not limited thereto. Any changes or substitutions within the technical scope disclosed in the embodiments of the present application should be covered within the protection scope of the embodiments of the present application. Therefore, the protection scope of the embodiments of the present application should be determined by the protection scope of the claims.

## Claims

1. A control method for a cleaning robot, applied to a cleaning system, wherein the cleaning system comprises a cleaning robot and a cleaning base station, the cleaning base station comprises a receiving unit, a transport mechanism, a first cleaning component, and a second cleaning component, and the first cleaning component and the second cleaning component correspond to different cleaning areas; the receiving unit is configured to receive a cleaning component detached from the cleaning robot, and to receive a cleaning component to be installed on the cleaning robot; and the method includes:
after completing, by the cleaning robot, cleaning of all sub-areas in a first area based on the first cleaning component currently installed, controlling the cleaning robot to return to the cleaning base station to perform a replacement with the second cleaning component required for cleaning a second area; wherein the first area comprises at least one sub-area to be cleaned using the first cleaning component;
after the cleaning robot returns to the cleaning base station and completes detachment of the first cleaning component, controlling the cleaning robot to drive out of the cleaning base station; and
after the cleaning robot is located outside the cleaning base station, if it is determined that a cleaning component present in the receiving unit is the second cleaning component, controlling the cleaning robot to drive into the cleaning base station to install the second cleaning component in the receiving unit.

2. The method according to claim 1, wherein the cleaning areas corresponding to the first cleaning component and the second cleaning component are determined by at least one of the following manners:
determining based on position information of the cleaning areas corresponding to the first cleaning component and the second cleaning component;
determining based on material information of surfaces to be cleaned in the cleaning areas corresponding to the first cleaning component and the second cleaning component;
determining based on a degree of dirtiness of the surfaces to be cleaned in the cleaning areas corresponding to the first cleaning component and the second cleaning component; and
determining based on functional information of the cleaning areas corresponding to the first cleaning component and the second cleaning component.

3. The method according to claim 1 or 2, wherein after the completing, by the cleaning robot, the cleaning of all the sub-areas in the first area based on the first cleaning component currently installed, the controlling the cleaning robot to return to the cleaning base station to perform the replacement with the second cleaning component required for cleaning the second area comprises:
determining the first area to be cleaned by the cleaning robot based on the first cleaning component currently installed based on a preset cleaning sequence;
controlling the cleaning robot to clean all the sub-areas in the first area based on the first cleaning component, and after cleaning is completed, determining the second area to be cleaned by the cleaning robot based on the preset cleaning sequence; and
controlling the cleaning robot to return to the cleaning base station to perform the replacement with the second cleaning component required for cleaning the second area.

4. The method according to claim 3, wherein the preset cleaning sequence is determined by any one of the following manners:
after the cleaning robot completes mapping, generating the preset cleaning sequence for recognized cleaning areas based on cleaning components required for the cleaning areas;
in response to a voice control command from a user, generating the preset cleaning sequence for the cleaning areas, wherein the voice control command is used to adjust a cleaning component required for at least one cleaning area and a cleaning sequence of the at least one cleaning area;
in response to a configuration operation from the user on a terminal device, generating the preset cleaning sequence for the cleaning areas, where the configuration operation is used to configure the cleaning component required for at least one cleaning area and the cleaning sequence of the at least one cleaning area; and the terminal device establishes a communication connection with the cleaning robot; and
generating the preset cleaning sequence for the cleaning areas based on historical information of a cleaning component used after the last cleaning task is completed; and
wherein in each cleaning area, all sub-areas are grouped into one group and cleaned in a specific sequence, and a next group is cleaned after one group is completed.

5. The method according to claim 3 or 4, wherein the cleaning base station further comprises a third cleaning component, the third cleaning component and the second cleaning component correspond to different cleaning areas, and the third cleaning component corresponds to a third area; and the method further comprises:
after determining the second area to be cleaned by the cleaning robot based on the preset cleaning sequence, determining a first duration for the cleaning robot to return to the cleaning base station to perform the replacement with the second cleaning component and return to the second area, and determining a second duration for the cleaning robot to return to the cleaning base station to perform a replacement with the third cleaning component and return to the third area; wherein the third area is a cleaning area closest to the first area and/or the cleaning base station; and
determining a target cleaning component to be replaced by the cleaning robot based on the first duration and the second duration, to clean a target area based on the target cleaning component.

6. The method according to claim 5, wherein the determining the target cleaning component to be replaced by the cleaning robot based on the first duration and the second duration comprises:
in a case where the first duration is less than or equal to the second duration, controlling the cleaning robot to return to the cleaning base station to perform the replacement with the second cleaning component, to clean the second area based on the second cleaning component; and
in a case where the first duration is greater than the second duration, controlling the cleaning robot to return to the cleaning base station to perform the replacement with the third cleaning component to clean the third area based on the third cleaning component, and to return to the cleaning base station to perform the replacement with the second cleaning component after cleaning of the third area is completed.

7. The method according to claim 5 or 6, wherein the determining the first duration for the cleaning robot to return to the cleaning base station to perform the replacement with the second cleaning component and return to the second area comprises:
determining a first path for the cleaning robot to return from a current position thereof to the cleaning base station, a second path for the cleaning robot to travel from the cleaning base station to the second area, and a driving speed of the cleaning robot;
determining a third duration to return to the cleaning base station based on a length of the first path and the driving speed and determining a fourth duration to travel to the second area based on a length of the second path and the driving speed;
estimating a fifth duration required for the cleaning robot to perform the replacement according to a previous replacement duration of the second cleaning component; and
determining the first duration based on the third duration, the fourth duration, the fifth duration, and a sixth duration; wherein the sixth duration is an average duration required for the cleaning robot to avoid living obstacles within a historical time period.

8. The method according to any one of claims 1 to 7, wherein the completing, by the cleaning robot, the cleaning of all the sub-areas in the first area based on the first cleaning component currently installed comprises:
when performing traversal cleaning of all the sub-areas in the first area based on the first cleaning component, in a case where a first obstacle area is detected during a process of travelling from a current position to a target sub-area, cleaning the target sub-area by the cleaning robot based on the first cleaning component after passing the first obstacle area to complete the cleaning of all the sub-areas in the first area; wherein the first obstacle area is an obstacle area that the cleaning robot is capable of crossing.

9. The method according to any one of claims 1 to 8, wherein the completing, by the cleaning robot, the cleaning of all the sub-areas in the first area based on the first cleaning component currently installed comprises:
when performing traversal cleaning of all the sub-areas in the first area based on the first cleaning component, in a case where a second obstacle area is detected during a process of travelling from a current position to a target sub-area, determining whether there are other sub-areas to be cleaned using the first cleaning component; wherein the second obstacle area comprises an area where an uncrossable obstacle is located and/or a restricted area formed based on the obstacle; and
in a case where it is determined that there are other sub-areas to be cleaned, cleaning the other sub-areas to be cleaned based on the first cleaning component.

10. The method according to claim 9, further comprising:
in a case where it is determined that there are no other sub-areas to be cleaned, controlling the cleaning robot to return to the cleaning base station to perform the replacement with the second cleaning component required to perform cleaning of a next area.

11. The method according to any one of claims 1 to 10, wherein the cleaning robot comprises a body and a recognition sensor that is configured to recognize a presence of the second cleaning component in the receiving unit; the determining that the cleaning component present in the receiving unit is the second cleaning component comprises:
determining that the second cleaning component is present in the receiving unit based on a recognition result of the recognition sensor; wherein a recognition range of the recognition sensor covers the second cleaning component in the receiving unit.

12. The method according to claim 11, further comprising:
when it is determined that a posture of the cleaning robot is not capable of recognizing the second cleaning component in the cleaning base station, controlling the cleaning robot to adjust the posture thereof so that the recognition sensor faces a direction in which it is capable of detecting the second cleaning component in the cleaning base station.

13. The method according to claim 12, wherein the controlling the cleaning robot to drive into the cleaning base station comprises:
in a case where it is determined that the second cleaning component is present in the receiving unit, controlling the cleaning robot to adjust the posture thereof again so that the cleaning robot faces a direction in which the cleaning robot is dockable with the cleaning base station, and controlling the cleaning robot to drive into the cleaning base station.

14. The method according to any one of claims 1 to 13, wherein the cleaning base station further comprises a storage unit and a drying apparatus, the storage unit is configured to store the first cleaning component and the second cleaning component, and the drying apparatus comprises an air outlet facing the storage unit for providing hot air to the storage unit; and the method further comprises:
after the cleaning robot drives out of the cleaning base station, controlling the transport mechanism to pick up the first cleaning component from the receiving unit and control the transport mechanism to transport the picked-up first cleaning component to the storage unit; and controlling the transport mechanism to retrieve the second cleaning component from the storage unit and transport the second cleaning component to the receiving unit for installing by the cleaning robot; and
after the first cleaning component is transported to the storage unit, controlling the air outlet of the drying apparatus to open to dry the first cleaning component.

15. The method according to any one of claims 1 to 14, further comprising:
after completing the detachment of the first cleaning component, if it is determined that the cleaning robot is still connected to the first cleaning component, and/or if it is determined that the first cleaning component is not present in the receiving unit, generating first abnormality information and/or repeating the detachment of the first cleaning component.

16. The method according to any one of claims 1 to 15, wherein the cleaning base station further comprises a storage unit that is configured to store the first cleaning component and the second cleaning component; and the method further comprises:
after the transport mechanism completes an action of transporting the second cleaning component from the storage unit to the receiving unit, if it is determined that the cleaning component present in the receiving unit is not the second cleaning component, generating second abnormality information and/or controlling the transport mechanism to perform an action of transporting the second cleaning component from the storage unit to the receiving unit again.

17. The method according to any one of claims 1 to 16, wherein the cleaning base station further comprises a storage unit that is configured to store the first cleaning component and the second cleaning component; and the method further comprises:
before determining that the second cleaning component is present in the receiving unit, controlling the transport mechanism to retrieve the second cleaning component from the storage unit, and controlling the transport mechanism to transport the retrieved second cleaning component to the receiving unit; and
after it is determined that the second cleaning component is located in the receiving unit, controlling the transport mechanism to leave a position corresponding to the receiving unit.

18. A control apparatus for a cleaning robot, applied to a cleaning system, wherein the cleaning system comprises a cleaning robot and a cleaning base station, the cleaning base station comprises a receiving unit, a transport mechanism, a first cleaning component, and a second cleaning component, and the first cleaning component and the second cleaning component correspond to different cleaning areas; the receiving unit is configured to receive a cleaning component detached from the cleaning robot, and to receive a cleaning component to be installed on the cleaning robot; and the apparatus comprises:
a first control module, configured to, after completing, by the cleaning robot, cleaning of all sub-areas in a first area based on the first cleaning component currently installed, control the cleaning robot to return to the cleaning base station to perform a replacement with the second cleaning component required for cleaning a second area; wherein the first area comprises at least one sub-area to be cleaned using the first cleaning component;
a second control module, configured to, after the cleaning robot returns to the cleaning base station and completes detachment of the first cleaning component, control the cleaning robot to drive out of the cleaning base station; and
a third control module, configured to, after the cleaning robot is located outside the cleaning base station, if it is determined that a cleaning component present in the receiving unit is the second cleaning component, control the cleaning robot to drive into the cleaning base station to install the second cleaning component in the receiving unit.

19. A cleaning system, comprising a cleaning robot and a cleaning base station, wherein the cleaning base station comprises a receiving unit, a transport mechanism, a first cleaning component, and a second cleaning component, and the first cleaning component and the second cleaning component correspond to different cleaning areas; and the receiving unit is configured to receive a cleaning component detached from the cleaning robot, and to receive a cleaning component to be installed on the cleaning robot; and
the cleaning system is configured to perform the method according to any one of claims 1 to 17.

20. A computer-readable storage medium, storing computer-executable instructions, which, when executed by a processor, are configured to implement the method according to any one of claims 1 to 17.

21. A computer program product, comprising a computer program, which, when executed by a processor, implements the method according to any one of claims 1 to 17.
